(19) Europäisches Patentamt / European Patent Office / Office européen des brevets

(11) **EP 3 546 714 A2**

(12) **EUROPEAN PATENT APPLICATION**

(43) Date of publication:
**02.10.2019 Bulletin 2019/40**

(51) Int Cl.:
***F01N 3/20*** (2006.01)

(21) Application number: **19161173.0**

(22) Date of filing: **07.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2018 JP 2018058044**

(71) Applicant: **Mazda Motor Corporation Aki-gun Hiroshima 730-8670 (JP)**

(72) Inventor: **UCHIYAMA, Kazuma Aki-gun, Hiroshima 730-8670 (JP)**

(74) Representative: **Müller-Boré & Partner Patentanwälte PartG mbB Friedenheimer Brücke 21 80639 München (DE)**

(54) **EXHAUST PURIFICATION DEVICE AND EXHAUST PURIFICATION METHOD FOR INTERNAL COMBUSTION ENGINE**

(57) A slip amount estimation step is provided to estimate a slip amount of ammonia that is the amount of ammonia discharged into the portion of the exhaust passage on the downstream side of the NOx selective reduction catalyst on the basis of an estimated ammonia adsorption amount estimated in an ammonia adsorption amount estimation step and a detected catalytic temperature detected in a catalytic temperature detection step. The slip amount of ammonia is estimated such that an increase in the slip amount of ammonia with respect to an increase in a temperature of the NOx selective reduction catalyst is larger as the temperature of the NOx selective reduction catalyst is higher.

Fig.10

**EP 3 546 714 A2**

Printed by Jouve, 75001 PARIS (FR)

**Description**

[Technical Field]

A technique disclosed herein belongs to the technical field that relates to a method of determining an exhaust gas state of an engine, a method for determining abnormality of a catalyst, an exhaust gas state determination device, a catalyst abnormality determination device, and an engine.

[Background Art]

Conventionally, an engine that includes a NOx selective reduction catalyst and reducing agent supply means has been known. The NOx selective reduction catalyst is provided in an exhaust passage and reduces NOx by a supplied reducing agent. The reducing agent supply means can supply ammonia or a precursor of ammonia as the reducing agent to the NOx selective reduction catalyst.

For example, Patent Document 1 discloses a device that includes: a NOx selective reduction catalyst that is provided in an exhaust passage of an internal combustion engine (an engine) and uses ammonia as a reducing agent; a reducing agent supply section that supplies ammonia or a precursor of ammonia to exhaust gas flowing into the NOx selective reduction catalyst; and a NOx sensor that is disposed in a portion of the exhaust passage on a downstream side of the NOx selective reduction catalyst and detects ammonia in the exhaust gas as NOx, and determines deterioration of the NOx selective reduction catalyst on the basis of a detection value of the NOx sensor. In the cases where an amount of ammonia that flows out of the NOx selective reduction catalyst is estimated and where the outflow amount of ammonia is large, use of the detection value of the NOx sensor in the deterioration determination is restricted, or the deterioration determination itself is prohibited.

In addition, it is disclosed in Patent Document 1 that an ammonia adsorption amount of the NOx selective reduction catalyst is increased when a temperature of the NOx selective reduction catalyst is increased and that ammonia is likely to be discharged into the passage on a downstream side of the NOx selective reduction catalyst when the ammonia adsorption amount becomes excessive.

[Prior Art Documents]

[Patent documents]

[Patent document 1] JP-A-2014-109224

[Summary of the Invention]

[Problem to be solved by the invention]

It was found in the investigation by the inventors of the present application that an amount of ammonia (hereinafter also referred to as a slip amount of ammonia) discharged into the passage on the downstream side of the NOx selective reduction catalyst was determined by a balance between an adsorption reaction rate and a desorption reaction rate of ammonia by the NOx selective reduction catalyst. In other words, when the adsorption reaction rate of ammonia is higher than the desorption reaction rate thereof, adsorption reaction of ammonia is apparently dominant, and thus the slip amount of ammonia is reduced. Meanwhile, when the desorption reaction rate of ammonia is higher than the adsorption reaction rate thereof, desorption reaction of ammonia is apparently dominant, and thus the slip amount of ammonia is increased. Accordingly, instead of only considering the ammonia adsorption amount of the NOx selective reduction catalyst as in Patent Document 1, it is also necessary to consider a parameter that influences the adsorption reaction rate and the desorption reaction rate of ammonia.

A technique disclosed herein has been made in view of such a point and therefore has a purpose of improving estimation accuracy of an amount of ammonia discharged into a passage on a downstream side of a NOx selective reduction catalyst in an engine that includes the NOx selective reduction catalyst.

[Means for solving the Problem]

In order to solve the problems described above, a technique disclosed herein is directed to a method for determining an exhaust gas state of an engine. The engine includes a NOx selective reduction catalyst that is provided in an exhaust passage of the engine and reduces NOx by using a supplied reducing agent, and a reducing agent supplier capable of supplying ammonia or a precursor of ammonia as the reducing agent to the NOx selective reduction catalyst.

The method includes an ammonia adsorption amount estimation step of estimating an ammonia adsorption amount of the NOx selective reduction catalyst, a catalytic temperature detection step of detecting a temperature of the NOx selective reduction catalyst, and a slip amount estimation step of estimating a slip amount of ammonia, that is an amount of ammonia discharged into a portion of the exhaust passage on a downstream side of the NOx selective reduction catalyst, on the basis of the estimated ammonia adsorption amount that is estimated in the ammonia adsorption amount estimation step and the detected catalytic temperature that is detected in the catalytic temperature detection step. The slip amount of ammonia is estimated such that an increase in the slip amount of ammonia with respect to an increase in the detected catalytic temperature is larger as the detected catalytic temperature is higher.

Further particularly, in the slip amount estimation step, the slip amount of ammonia is estimated such that an increase in the slip amount of ammonia with respect to an increase in the detected catalytic temperature is larger when the detected catalytic temperature is high than when the detected catalytic temperature is low in the case where the detected catalytic temperatures are compared by using the same estimated ammonia adsorption amount.

Further particularly, in the slip amount estimation step, the slip amount of ammonia is estimated as substantially 0 when the detected catalytic temperature is lower than a specified temperature.

Further particularly, in the slip amount estimation step, the larger slip amount of ammonia is estimated as the estimated ammonia adsorption amount is increased, particularly in the case where the estimated ammonia adsorption amounts are compared at the same detected catalytic temperature.

Further particularly, in the slip amount estimation step, the slip amount of ammonia is estimated such that the increase in the slip amount of ammonia with respect to an increase in the estimated ammonia adsorption amount is larger as the estimated ammonia adsorption amount is increased, particularly in the case where the estimated ammonia adsorption amounts are compared at the same detected catalytic temperature.

Further particularly, the engine further includes a NOx storage catalyst that is disposed in a portion of the exhaust passage on an upstream side of the NOx selective reduction catalyst, capable of storing NOx in exhaust gas, and capable of reducing stored NOx, and a NOx catalyst regeneration controller that is configured to bring an air-fuel ratio of the exhaust gas to an air-fuel ratio equal to or near a stoichiometric air-fuel ratio or a richer air-fuel ratio than the stoichiometric air-fuel ratio in order to reduce NOx stored in the NOx storage catalyst. The method further includes a reduction-time ammonia produced amount estimation step of estimating an amount of ammonia, that is discharged from the NOx storage catalyst to the exhaust gas, when the NOx catalyst regeneration controller reduces NOx stored in the NOx storage catalyst.

Further particularly, in the ammonia adsorption amount estimation step, the ammonia adsorption amount of the NOx selective reduction catalyst is estimated on the basis of the amount of ammonia or an amount of a precursor of ammonia that is supplied by the reducing agent supplier and/or on the basis of the amount of ammonia that is estimated in the reduction-time ammonia produced amount estimation step.

Further particularly, a method of determining abnormality of a catalyst for an engine uses the above method of determining an exhaust gas state. The engine further includes a NOx sensor that is disposed in the portion of the exhaust passage on the downstream side of the NOx selective reduction catalyst and whose output value varies in accordance with an amount of NOx and the amount of ammonia in the exhaust gas. The method of determining abnormality includes an abnormality determination step of making an abnormality determination on whether the NOx selective reduction catalyst is abnormal on the basis of the output value of the NOx sensor.

Further particularly, the abnormality determination step includes an abnormality determination restriction step of restricting the abnormality determination when the slip amount of ammonia that is estimated in the slip amount estimation step is equal to or larger than a specified slip amount.

Further particularly, a computer program product includes computer-readable instructions which, when loaded and executed on a suitable system, perform the above method. The technique disclosed herein is also directed to an exhaust gas state determination device. The engine includes a NOx selective reduction catalyst that is provided in an exhaust passage of the engine and configured to reduce NOx by using a supplied reducing agent, and a reducing agent supplier capable of supplying ammonia or a precursor of ammonia as the reducing agent to the NOx selective reduction catalyst. The catalyst abnormality determination device includes an ammonia adsorption amount estimator configured to estimate an ammonia adsorption amount of the NOx selective reduction catalyst, a catalytic temperature detector configured to detect a temperature of the NOx selective reduction catalyst, and a slip amount estimator configured to estimate a slip amount of ammonia, that is an amount of ammonia discharged into a portion of the exhaust passage, on a downstream side of the NOx selective reduction catalyst on the basis of the estimated ammonia adsorption amount that is estimated by the ammonia adsorption amount estimator and the detected catalytic temperature that is detected by the catalytic temperature detector. The slip amount estimator is configured to estimate the slip amount of ammonia such that an increase in the slip amount of ammonia with respect to an increase in the detected catalytic temperature is larger as the detected catalytic temperature is higher.

Further particularly, the slip amount estimator is configured to estimate the slip amount of ammonia such that an increase in the slip amount of ammonia with respect to an increase in the detected catalytic temperature is larger when the detected catalytic temperature is high than when the detected catalytic temperature is low in the case where the detected catalytic temperatures are compared by using the same estimated ammonia adsorption amount.

Further particularly, a catalyst abnormality determination device includes an exhaust gas state determination device, a NOx sensor that is to be disposed in the portion of the exhaust passage on the downstream side of the NOx selective reduction catalyst and whose output value varies in accordance with an amount of NOx and an amount of ammonia in the exhaust gas, and an abnormality determiner configured to make an abnormality determination on whether the NOx selective reduction catalyst is abnormal on the basis of the output value of the NOx sensor.

Further particularly, the catalyst abnormality determination device further includes an abnormality determination restrictor that restricts the abnormality determination by the abnormality determiner when the slip amount of ammonia that is estimated by the slip amount estimator is equal to or larger than a specified slip amount.

Further particularly, an engine, includes the above exhaust gas state determination device, or the above catalyst abnormality determination device according. The engine further includes a NOx selective reduction catalyst that is provided in an exhaust passage of the engine and configured to reduces NOx by using a supplied reducing agent, and a reducing agent supplier capable of supplying ammonia or a precursor of ammonia as the reducing agent to the NOx selective reduction catalyst.

In order to solve the problems described above, a technique disclosed herein is directed to a method for determining an exhaust gas state of an engine, and has a configuration in which the engine includes: a NOx selective reduction catalyst that is provided in an exhaust passage of the engine and reduces NOx by using a supplied reducing agent; and a reducing agent supplier capable of supplying ammonia or a precursor of ammonia as the reducing agent to the NOx selective reduction catalyst, and the method for determining an exhaust gas state of an engine includes: an ammonia adsorption amount estimation step of estimating an ammonia adsorption amount of the NOx selective reduction catalyst; a catalytic temperature detection step of detecting a temperature of the NOx selective reduction catalyst; and a slip amount estimation step of estimating a slip amount of ammonia that is an amount of ammonia discharged into a portion of the exhaust passage on a downstream side of the NOx selective reduction catalyst on the basis of the estimated ammonia adsorption amount that is estimated in the ammonia adsorption amount estimation step and the detected catalytic temperature that is detected in the catalytic temperature detection step, and is configured that, in the slip amount estimation step, the slip amount of ammonia is estimated such that an increase in the slip amount of ammonia with respect to an increase in the detected catalytic temperature is larger when the detected catalytic temperature is high than when the detected catalytic temperature is low in the case where the detected catalytic temperatures are compared by using the same estimated ammonia adsorption amount.

According to this configuration, it is possible to improve estimation accuracy of the slip amount of ammonia that is the amount of ammonia discharged into the portion of the exhaust passage on the downstream side of the NOx selective reduction catalyst.

More specifically, while an adsorption reaction rate primarily depends on the ammonia adsorption amount of the NOx selective reduction catalyst, a desorption reaction rate primarily depends on the ammonia adsorption amount of the NOx selective reduction catalyst and the temperature of the NOx selective reduction catalyst. Thus, the slip amount of ammonia, which is determined by a balance between the adsorption reaction rate and the desorption reaction rate can be estimated accurately by considering the ammonia adsorption amount of the NOx selective reduction catalyst and the temperature of the NOx selective reduction catalyst.

The inventors of the present application calculated the slip amount of ammonia at the time of changing the ammonia adsorption amount of the NOx selective reduction catalyst and the temperature of the NOx selective reduction catalyst. As a result, it was understood that, under a condition that the ammonia adsorption amount of the NOx selective reduction catalyst was the same in a temperature range where the NOx selective reduction catalyst could be used, the increase in the slip amount of ammonia with respect to the increase in the detected catalytic temperature was larger when the temperature of the NOx selective reduction catalyst was high than when the temperature of the NOx selective reduction catalyst was low.

Accordingly, by adopting a configuration as described above, it is possible to estimate the slip amount of ammonia by considering a parameter that influences the adsorption reaction rate and the desorption reaction rate of ammonia by the NOx selective reduction catalyst. Therefore, the estimation accuracy of the slip amount of ammonia can be improved.

In the further investigation by the inventors of the present application, it was understood that, in the temperature range where the NOx selective reduction catalyst could be used, slippage of ammonia hardly occurred when the temperature of the NOx selective reduction catalyst was lower than the specified temperature.

That is, in the slip amount estimation step, the slip amount of ammonia may be estimated as substantially 0 when the detected catalytic temperature is lower than a specified temperature.

In this way, the slip amount of ammonia can be estimated by further accurately reflecting the influence of the temperature of the NOx selective reduction catalyst on the slip amount of ammonia. As a result, the estimation accuracy of the slip amount of ammonia can further be improved.

In the further investigation by the inventors of the present application, it was understood that, under the condition that the temperature of the NOx selective reduction catalyst was the same temperature within the temperature range where the NOx selective reduction catalyst could be used, the slip amount of ammonia was increased as the ammonia adsorption amount of the NOx selective reduction catalyst was increased.

That is, in the method for determining an exhaust gas state of an engine, in the slip amount estimation step, the larger slip amount of ammonia may be estimated as the estimated ammonia adsorption amount is increased in the case where the estimated ammonia adsorption amounts are compared at the same detected catalytic temperature.

In this way, the slip amount of ammonia can be estimated by accurately reflecting the influence of the ammonia adsorption amount of the NOx selective reduction catalyst on the slip amount of ammonia. As a result, the estimation accuracy of the slip amount of ammonia can further be improved.

In the further investigation by the inventors of the present application, it was understood that, under the condition that the temperature of the NOx selective reduction catalyst was the same temperature within the temperature range where the NOx selective reduction catalyst could be used, the increase in the slip amount of ammonia with respect to an increase in the ammonia adsorption amount of the NOx selective reduction catalyst was increased as the ammonia adsorption amount of the NOx selective reduction catalyst was increased.

That is, in the method for determining an exhaust gas state of an engine, in the slip amount estimation step, the slip amount of ammonia may be estimated such that the increase in the slip amount of ammonia with respect to the increase in the estimated ammonia adsorption amount is increased as the estimated ammonia adsorption amount is increased in the case where the estimated ammonia adsorption amounts are compared at the same detected catalytic temperature.

According to this configuration, the slip amount of ammonia can be estimated by further accurately reflecting the influences of the ammonia adsorption amount of the NOx selective reduction catalyst and the temperature of the NOx selective reduction catalyst on the slip amount of ammonia. As a result, the estimation accuracy of the slip amount of ammonia can further be improved.

In an aspect of the method for determining an exhaust gas state of an engine, the engine further includes: a NOx storage catalyst that is disposed in a portion of the exhaust passage on an upstream side of the NOx selective reduction catalyst, capable of storing NOx in exhaust gas, and capable of reducing stored NOx; and a NOx catalyst regeneration controller that brings an air-fuel ratio of the exhaust gas to an air-fuel ratio near a stoichiometric air-fuel ratio or a richer air-fuel ratio than the stoichiometric air-fuel ratio in order to reduce NOx stored in the NOx storage catalyst. The method for determining an exhaust gas state of an engine further includes: a reduction-time ammonia produced amount estimation step of estimating an amount of ammonia that is discharged from the NOx storage catalyst to the exhaust gas when the NOx catalyst regeneration controller reduces NOx stored in the NOx storage catalyst. In the ammonia adsorption amount estimation step, the ammonia adsorption amount of the NOx selective reduction catalyst is estimated on the basis of the amount of ammonia or an amount of a precursor of ammonia that is supplied by the reducing agent supplier and the amount of ammonia that is estimated in the reduction-time ammonia produced amount estimation step.

That is, when the air-fuel ratio of the exhaust gas is brought to the air-fuel ratio near the stoichiometric air-fuel ratio or to the richer air-fuel ratio than the stoichiometric air-fuel ratio, a reaction to reduce NOx that is stored in the NOx storage catalyst includes a reaction of NOx with HC in the exhaust gas. Accordingly, in a process of reducing NOx that is stored in the NOx storage catalyst, hydrogen in HC reacts with nitrogen in NOx to produce ammonia. In order to improve the estimation accuracy of the ammonia adsorption amount of the NOx selective reduction catalyst, it is preferred to consider the amount of ammonia that is produced by reducing NOx stored in the NOx storage catalyst. Thus, by adopting the configuration as described above, it is possible to improve the estimation accuracy of the ammonia adsorption amount of NOx selective reduction catalyst in the ammonia adsorption amount estimation step. Therefore, it is possible to further improve the estimation accuracy of the slip amount of ammonia.

The technique according to the present disclosure also has a method for determining abnormality of a catalyst for an engine using the method for determining an exhaust gas state of an engine as a target. More specifically, in the method for determining abnormality of a catalyst for an engine using the method for determining an exhaust gas state of an engine as an target, the engine further includes a NOx sensor that is disposed in the portion of the exhaust passage on the downstream side of the NOx selective reduction catalyst and whose output value varies in accordance with an amount of NOx and an amount of ammonia in an exhaust gas. The method for determining abnormality of a catalyst for an engine includes an abnormality determination step of making an abnormality determination on whether the NOx selective reduction catalyst is abnormal on the basis of the output value of the NOx sensor. The abnormality determination step is configured to include an abnormality determination restriction step of restricting the abnormality determination when the slip amount of ammonia that is estimated in the slip amount estimation step is equal to or larger than a specified slip amount.

According to this configuration, the output value of the NOx sensor varies in accordance with the amount of NOx and the amount of ammonia in the exhaust gas. Accordingly, when the amount of ammonia in the exhaust gas is large, the amount of NOx in the exhaust gas is determined to be large even with the small amount of NOx. For this reason, in the case where the abnormality determination on whether the NOx selective reduction catalyst is abnormal is made on the basis of the output value of the NOx sensor, such an erroneous determination that the NOx selective reduction catalyst is abnormal is possibly made even with the small amount of NOx in the exhaust gas. In view of this, the abnormality determination is restricted when the slip amount of ammonia that is estimated in the slip amount estimation step is equal to or larger than the specified slip amount. In this way, it is possible to suppress such an erroneous determination that the NOx selective reduction catalyst is abnormal from being made in the case where the amount of NOx in the exhaust gas is small.

The technique according to the present disclosure also has a catalyst abnormality determination device for an engine as a target. More specifically, in the catalyst abnormality determination device for the engine as the target, the engine includes: a NOx selective reduction catalyst that is provided in an exhaust passage of the engine and reduces NOx by using a supplied reducing agent; and a reducing agent supplier capable of supplying ammonia or a precursor of ammonia as the reducing agent to the NOx selective reduction catalyst. The catalyst abnormality determination device includes: an ammonia adsorption amount estimator that estimates an ammonia adsorption amount of the NOx selective reduction catalyst; a catalytic temperature detector that detects a temperature of the NOx selective reduction catalyst; a slip amount estimator that estimates a slip amount of ammonia that is an amount of ammonia discharged into a portion of the exhaust passage on a downstream side of the NOx selective reduction catalyst on the basis of the estimated ammonia adsorption amount that is estimated by the ammonia adsorption amount estimator and the detected catalytic temperature that is detected by the catalytic temperature detector; a NOx sensor that is disposed in the portion of the exhaust passage on the downstream side of the NOx selective reduction catalyst and whose output value varies in accordance with an amount of NOx and an amount of ammonia in the exhaust gas; an abnormality determiner that makes an abnormality determination on whether the NOx selective reduction catalyst is abnormal on the basis of the output value of the NOx sensor; and an abnormality determination restrictor that restricts the abnormality determination by the abnormality determiner when the slip amount of ammonia that is estimated by the slip amount estimator is equal to or larger than a specified slip amount. The slip amount estimator is configured to estimate the slip amount of ammonia such that an increase in the slip amount of ammonia with respect to an increase in the detected catalytic temperature is larger when the detected catalytic temperature is high than when the detected catalytic temperature is low in the case where the detected catalytic temperatures are compared by using the same estimated ammonia adsorption amount.

Also, with this configuration, the output value of the NOx sensor varies in accordance with the amount of NOx and the amount of ammonia in the exhaust gas. Accordingly, even when the amount of NOx in the exhaust gas is small, the abnormality determiner possibly makes such an erroneous determination that the NOx selective reduction catalyst is abnormal. In view of this, the abnormality determination is restricted when the slip amount of ammonia that is estimated by the slip amount estimator is equal to or larger than the specified slip amount. In this way, it is possible to suppress such an erroneous determination that the NOx selective reduction catalyst is abnormal from being made in the case where the amount of NOx in the exhaust gas is small.

[Advantage of the invention]

As it has been described so far, according to the technique disclosed herein, parameters that influence an adsorption reaction rate and a desorption reaction rate of ammonia by the NOx selective reduction catalyst are taken into consideration. Therefore, it is possible to improve the estimation accuracy of the amount of ammonia discharged into the portion of the exhaust passage on the downstream side of the NOx selective reduction catalyst.

[Brief Description of the Drawings]

Fig. 1 is a schematic configuration diagram of an engine system to which a catalyst abnormality determination device for an engine according to an exemplary embodiment is applied.
Fig. 2 is a block diagram of a control system in the engine system.
Fig. 3 is a graph representing a control map of passive DeNOx control and active DeNOx control.
Fig. 4 is a flowchart that is executed when a catalyst for purifying exhaust gas is selected.
Fig. 5 is a part of a flowchart that is executed during execution of DeNOx control.
Fig. 6 is the rest of the flowchart that is executed during the execution of the DeNOx control.
Fig. 7 is a schematic view of principle of NOx detection by a NOx sensor.
Fig. 8 is a flowchart of a processing operation to estimate a slip amount of ammonia from a SCR catalyst.
Fig. 9 is a map representing the slip amount of ammonia that is based on an ammonia adsorption amount of the SCR catalyst and a temperature of the SCR catalyst.

Fig. 10 is a map representing the slip amount of ammonia with respect to the SCR catalytic temperature.

Fig. 11 is a map representing a relationship between concentration of ammonia in the exhaust gas and a correction coefficient based thereon.

Fig. 12 is a flowchart of a processing operation for an abnormality determination of the SCR catalyst.

Fig. 13 is a time chart that schematically illustrates a temporal change in each parameter for the abnormality determination of the SCR catalyst.

[Modes for Carrying Out the Invention]

A detailed description will hereinafter be made on an exemplary embodiment with reference to the drawings.

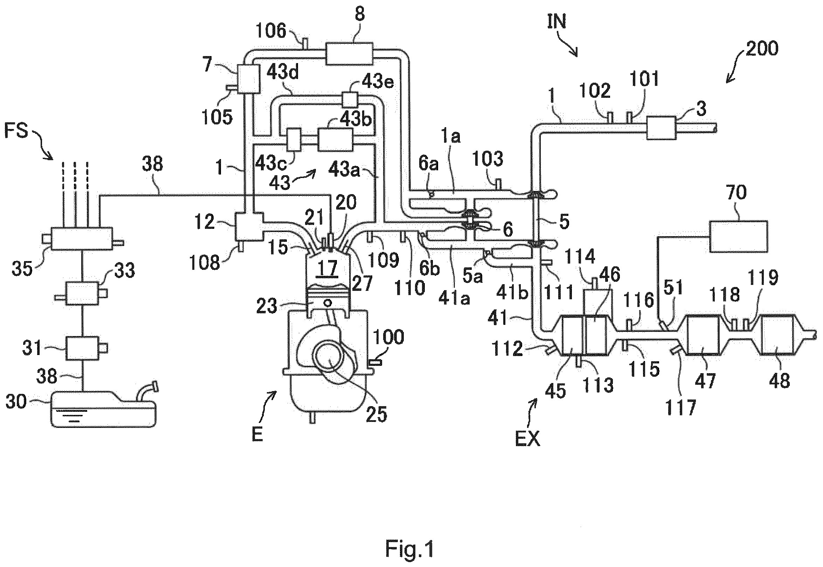

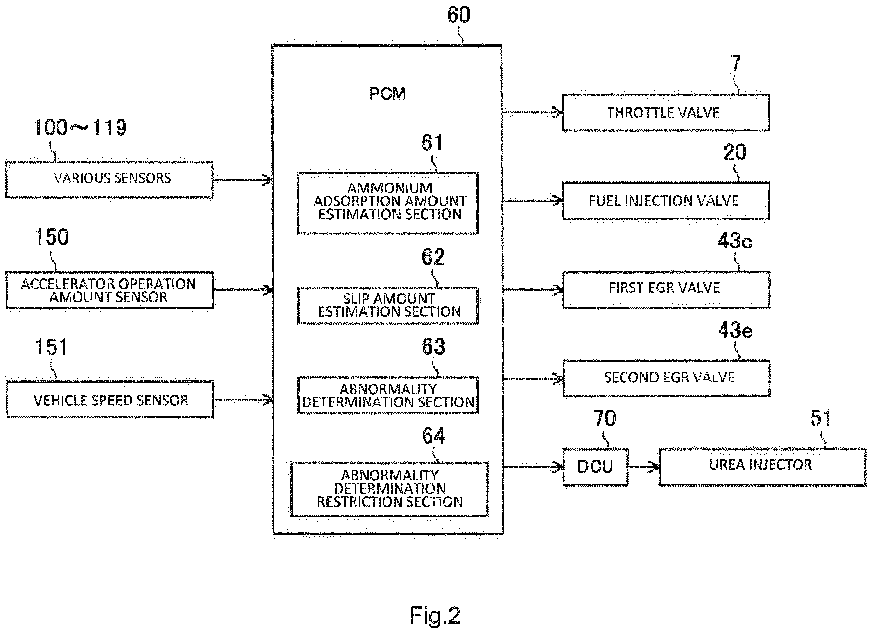

Fig. 1 particularly illustrates an engine system 200 to which a catalyst abnormality determination device for an engine according to this embodiment is applied. The engine system 200 particularly has: an engine E as a diesel engine; an intake system IN that supplies intake air to the engine E; a fuel supply system FS that supplies fuel to the engine E; an exhaust system EX from which exhaust gas of the engine E is discharged; and one or more sensors 100 to 119 that detect various states related to the engine system 200. In addition, the engine system 200 is provided with: a powertrain control module (PCM) 60 (see Fig. 2) that particularly controls the engine system 200; and a dosing control unit (DCU) 70 that particularly controls a urea injector 51, which will be described below. This engine system 200 is particularly an engine system provided in a vehicle, and the engine E is used as a drive source of the vehicle.

The intake system IN particularly has an intake passage 1 through which the intake air flows. In this intake passage 1, an air cleaner 3, a compressor of a first turbocharger 5, a compressor of a second turbocharger 6, an intercooler 8, a throttle valve 7, and a surge tank 12 are particularly sequentially provided from an upstream side. In addition, the intake passage 1 is particularly provided with: an intake bypass passage 1a that bypasses the compressor of the second turbocharger 6; and an intake bypass valve 6a that opens/closes the intake bypass passage 1a.

The airflow sensor 101 that particularly detects an intake air amount and the first intake temperature sensor 102 that detects a temperature of the intake air are provided in a portion of the intake passage 1 on an immediate downstream side of the air cleaner 3. The first intake pressure sensor 103 that particularly detects a pressure of the intake air is provided in a portion of the intake passage 1 between the first turbocharger 5 and the second turbocharger 6. The second intake temperature sensor 106 that detects a temperature of the intake air having flowed through the intercooler 8 is provided in a portion of the intake passage 1 on an immediate downstream side of the intercooler 8. The optional throttle valve 7 is provided with the position sensor 105 that detects an opening amount of the throttle valve 7. The surge tank 12 is provided with the second intake pressure sensor 108 that detects a pressure of the intake air in an intake manifold.

The engine E particularly has: an intake valve 15 used to introduce the intake air supplied from the intake manifold in the intake passage 1 into a combustion chamber 17; a fuel injection valve 20 that injects the fuel into the combustion chamber 17; a glow plug 21 that includes a heat-generating section heated by energization in the combustion chamber 17; a piston 23 that reciprocates by combustion of air-fuel mixture in the combustion chamber 17; and an exhaust valve 27 used to discharge the exhaust gas produced by the combustion of the air-fuel mixture in the combustion chamber 17 to an exhaust passage 41. The piston 23 is coupled to a crankshaft 25 via a connecting rod 24. Reciprocating motion of the piston 23 causes the crankshaft 25 to rotate.

The engine E is particularly provided with the crank angle sensor 100 that detects a rotation angle of the crankshaft 25. The PCM 60 (see Fig. 2) acquires an engine speed on the basis of a detection signal from the crank angle sensor 100.

The fuel supply system FS particularly has: a fuel tank 30 that stores the fuel; and a fuel supply passage 38 through which the fuel is supplied from the fuel tank 30 to the fuel injection valve 20. In the fuel supply passage 38, a low-pressure fuel pump 31, a high-pressure fuel pump 33, and a common rail 35 are sequentially provided from an upstream side.

The exhaust system EX particularly has the exhaust passage 41 through which the exhaust gas flows. In the exhaust passage 41, a turbine of the second turbocharger 6, a turbine of the first turbocharger 5, a NOx catalyst 45, a diesel particulate filter (DPF) 46, the urea injector 51, a selective catalytic reduction (SCR) catalyst 47, and a slip catalyst 48 are sequentially provided from an upstream side. The urea injector 51 injects urea into a portion of the exhaust passage 41 on a downstream side of the DPF 46, the SCR catalyst 47 uses urea injected by the urea injector 51 to purify NOx, and the slip catalyst 48 oxidizes and purifies unreacted ammonia discharged from the SCR catalyst 47. In addition, the exhaust passage 41 is provided with: an exhaust bypass passage 41a that bypasses the turbine of the second turbocharger 6; and an exhaust bypass valve 6b that opens/closes this exhaust bypass passage 41a. Furthermore, the exhaust passage 41 is provided with: a waste gate passage 41b that bypasses the turbine of the first turbocharger 5; and a waste gate valve 5a that opens/closes this waste gate passage 41b.

The NOx catalyst 45 is particularly a NOx storage catalyst (NSC) that stores NOx in the exhaust gas in a lean state where an air-fuel ratio of the exhaust gas is higher than a stoichiometric air-fuel ratio (an excess air ratio $\lambda$ satisfies

λ > 1) and that reduces stored NOx in a state where the air-fuel ratio of the exhaust gas is equal or close to, or near, the stoichiometric air-fuel ratio (λ ≈ 1) or a rich state where the air-fuel ratio of the exhaust gas is lower than the stoichiometric air-fuel ratio (λ < 1). In addition, the NOx catalyst 45 is particularly configured not only to have a function as the NSC but also to have a function as a diesel oxidation catalyst (DOC) that oxidizes hydrocarbons (HC), carbon monoxide (CO), and the like by using oxygen in the exhaust gas to produce water and carbon dioxide. In detail, the NOx catalyst 45 is provided such that a surface of a catalytic layer of the DOC is coated with a catalytic material of the NSC.

The DPF 46 is particularly a filter that collects particulate matters (PM) in the exhaust gas. The PMs that are collected by the DPF 46 are burned when being exposed to a high temperature and supplied with oxygen, and are then removed from the DPF 46.

The SCR catalyst 47 adsorbs ammonia that is produced from urea injected by the urea injector 51, and subjects adsorbed ammonia to a (reduction) reaction with NOx in the exhaust gas for purification. In this way, the SCR catalyst 47 corresponds to a NOx selective reduction catalyst that reduces NOx by using a supplied reducing agent, and the urea injector 51 corresponds to a reducing agent supplier that can supply urea as a precursor of ammonia as the reducing agent. The SCR catalyst 47 is configured that catalytic metal for reducing NOx by using ammonia is carried by zeolite that traps ammonia.

Both of the NOx catalyst 45 and the SCR catalyst 47 are catalysts capable of purifying NOx; however, a temperature at which a NOx purification rate (a NOx storage rate) is increased differs from each other. In detail, the NOx purification rate of the NOx catalyst 45 is increased when a temperature of the NOx catalyst 45 is relatively low. Meanwhile, the NOx purification rate of the SCR catalyst 47 is increased when a temperature of the SCR catalyst 47 (hereinafter referred to as a SCR catalytic temperature) is relatively high.

The exhaust pressure sensor 109 that particularly detects a pressure of the exhaust gas and the first exhaust temperature sensor 110 that detects a temperature of the exhaust gas are provided in a portion of the exhaust passage 41 on an upstream side of the second turbocharger 6. The $O_2$ sensor 111 that detects concentration of oxygen in the exhaust gas is provided in a portion of the exhaust passage 41 on an immediate downstream side of the first turbocharger 5. Near the NOx catalyst 45 in the exhaust passage 41, the second exhaust temperature sensor 112, the third exhaust temperature sensor 113, the differential pressure sensor 114, the fourth exhaust temperature sensor 115, and the first NOx sensor 116 are provided. The second exhaust temperature sensor 112 detects the temperature of the exhaust gas in a portion of the exhaust passage 41 on an immediate upstream side of the NOx catalyst 45, the third exhaust temperature sensor 113 detects the temperature of the exhaust gas in a portion of the exhaust passage 41 between the NOx catalyst 45 and the DPF 46, the differential pressure sensor 114 detects a pressure difference between a portion of the exhaust passage 41 on an immediate upstream side of the DPF 46 and a portion of the exhaust passage 41 on an immediate downstream side of the DPF 46, the fourth exhaust temperature sensor 115 detects the temperature of the exhaust gas in the portion of the exhaust passage 41 on the immediate downstream side of the DPF 46, and the first NOx sensor 116 detects concentration of NOx at a position on the immediate downstream side of the DPF 46 and on an upstream side of the urea injector 51. In addition, near the SCR catalyst 47 in the exhaust passage 41, the catalytic temperature sensor 117 that detects the SCR catalytic temperature and the second NOx sensor 118 that detects the concentration of NOx in a portion of the exhaust passage 41 on an immediate downstream side of the SCR catalyst 47. Furthermore, the exhaust passage 41 is provided with the PM sensor 119 that detects the PMs in the exhaust gas in a portion of the exhaust passage 41 on an immediate upstream side of the slip catalyst 48. Although a detailed description will be made later, at least the second NOx sensor 118 is a NOx sensor whose output value varies not only in accordance with an amount of NOx in the exhaust gas but also in accordance with an amount of ammonia in the exhaust gas.

The engine system 200 in this embodiment particularly further has an EGR device 43 that recirculates some of the exhaust gas into the intake passage 1. The EGR device 43 particularly has: an EGR passage 43a that connects a portion of the exhaust passage 41 on an upstream side of an upstream end of the exhaust bypass passage 41a and a portion of the intake passage 1 between the throttle valve 7 and the surge tank 12; an EGR cooler 43b that cools the exhaust gas flowing through the EGR passage 43a; and a first EGR valve 43c that opens/closes the EGR passage 43a. In addition, the EGR device 43 has: an EGR cooler bypass passage 43d that bypasses the EGR cooler 43b; and a second EGR valve 43e that opens/closes the EGR cooler bypass passage 43d.

The engine system 200 in this embodiment is primarily controlled by the PCM 60 that is mounted on the vehicle. The PCM 60 is a microprocessor that is configured to include a CPU, ROM, RAM, an I/O bus, and the like.

The PCM 60 particularly receives detection signals from the various sensors 100 to 119. In addition, the PCM 60 particularly receives detection signals output from an accelerator operation amount sensor 150 and a vehicle speed sensor 151. The accelerator operation amount sensor 150 particularly detects an accelerator operation amount that corresponds to an operation amount of an accelerator pedal (not illustrated) in the vehicle, and the vehicle speed sensor 151 detects a vehicle speed of the vehicle. On the basis of the received signals, the PCM 60 primarily controls actuation of the throttle valve 7, the fuel injection valve 20, the glow plug 21, the first EGR valve 43c, and the second EGR valve 43e. Furthermore, the PCM 60 controls actuation of the urea injector 51 via the DCU 70 by sending an output signal to the DCU 70.

Note that, although a detailed description will be made later, the PCM 60 particularly includes: an ammonia adsorption amount estimation section 61 that estimates an ammonia adsorption amount of the SCR catalyst 47; a slip amount estimation section 62 that estimates the amount of ammonia in the exhaust gas in the portion of the exhaust passage 41 on the downstream side of the SCR catalyst 47; an abnormality determination section 63 that makes an abnormality determination on whether the engine system 200 is abnormal under an abnormality determination condition that is based on the output value of the second NOx sensor 118; and an abnormality determination restriction section 64 that restricts the abnormality determination by the abnormality determination section 63.

<Normal Fuel Injection Control>

In normal fuel injection control in which DeNOx control, which will be described below, is not executed, the PCM 60 controls the fuel injection valve 20 such that the air-fuel ratio of the air-fuel mixture in the combustion chamber 17 is brought into the leaner state than the stoichiometric air-fuel ratio ($\lambda > 1$). In addition, in the normal fuel injection control, the PCM 60 stops performing post injection in the DeNOx control and only performs main injection.
In the normal fuel injection control, the PCM 60 particularly sets a fuel injection amount in the main injection in accordance with a driving state of the vehicle. More specifically, the PCM 60 initially acquires the input signals from the various sensors 100 to 119, 150, and 151. Next, the PCM 60 sets target acceleration on the basis of the driving state of the vehicle that includes the acquired operation of the accelerator pedal described above and the like. Next, the PCM 60 determines target torque of the engine E that is required to realize the determined target acceleration. Then, in order to make the engine E output the determined target torque, the PCM 60 calculates an injection amount that should be injected by the fuel injection valve 20 on the basis of the target torque and the engine speed.
In the normal fuel injection control, the PCM 60 particularly sets injection timing of the main injection in accordance with the driving state of the vehicle.
Thereafter, the PCM 60 controls the fuel injection valve 20 to realize the set injection amount and the set injection timing.

<DeNOx Control>

Next, a description will be made on the DeNOx control in which NOx stored in the NOx catalyst 45 (hereinafter also referred to as stored NOx) is desorbed from the NOx catalyst 45.
In this embodiment, when a NOx storage amount is equal to or larger than a first specified storage amount (for example, when the NOx storage amount is close to a storage limit), the PCM 60 executes the DeNOx control to reduce the amount of NOx stored in the NOx catalyst 45 approximately to 0. In addition, in this embodiment, even in the case where the NOx storage amount is smaller than the first specified storage amount, the PCM 60 possibly executes the DeNOx control when the NOx storage amount is equal to or larger than a second specified storage amount that is smaller than the first specified storage amount and the air-fuel ratio of the exhaust gas is shifted to the rich side due to the acceleration of the vehicle. In the following description, the DeNOx control that is executed when the NOx storage amount is equal to or larger than the first specified storage amount will be referred to as active DeNOx control, and the DeNOx control that is executed when the NOx storage amount is equal to or larger than the second specified storage amount and the air-fuel ratio of the exhaust gas is shifted to the rich side due to the acceleration of the vehicle will be referred to as passive DeNOx control. When these types of the control are not distinguished from each other, such control will simply be referred to as the DeNOx control.
As described above, the NOx catalyst 45 reduces stored NOx in the state where the air-fuel ratio of the exhaust gas is close to the stoichiometric air-fuel ratio ($\lambda \approx 1$) or the rich state where the air-fuel ratio of the exhaust gas is lower than the stoichiometric air-fuel ratio ($\lambda < 1$). Accordingly, in order to reduce stored NOx in the DeNOx control, it is necessary to reduce the air-fuel ratio of the exhaust gas to be lower than that during normal driving. In view of the above, in this embodiment, the post injection is performed in addition to the main injection. In this way, the air-fuel ratio of the exhaust gas is reduced, and stored NOx is thereby reduced. Note that the excess air ratio $\lambda$ during the DeNOx control is approximately $\lambda = 0.94$ to 1.06, for example.
The fuel injection amount in the post injection (hereinafter simply referred to as a post injection amount) is set on the basis of an operation state of the engine E. More specifically, initially, the PCM 60 at least acquires the intake air amount detected by the airflow sensor 101, the concentration of oxygen in the exhaust gas detected by the $O_2$ sensor 111, and the injection amount in the main injection that is calculated in the fuel injection control described above. The PCM 60 further acquires an amount of the exhaust gas (an EGR gas amount) that is calculated on the basis of a specified model or the like and is recirculated into the intake system IN by the EGR device 43.
Next, on the basis of a fresh air amount and the EGR gas amount that are acquired, the PCM 60 calculates an air amount that is introduced into the engine E. Then, the PCM 60 calculates the concentration of oxygen in the air that is introduced into the engine E from the calculated air amount.

Next, the PCM 60 calculates the post injection amount that is required to bring the air-fuel ratio of the exhaust gas near the stoichiometric air-fuel ratio or to a target air-fuel ratio (hereinafter referred to as a target DeNOx air-fuel ratio) that is equal to or lower than the stoichiometric air-fuel ratio. That is, in order to bring the air-fuel ratio of the exhaust gas to the target DeNOx air-fuel ratio, in addition to the injection amount in the main injection, the PCM 60 determines the fuel amount to be injected in the post injection. At this time, the PCM 60 calculates the post injection amount in consideration of a difference between the concentration of oxygen detected by the $O_2$ sensor 111 and the concentration of oxygen in the air introduced into the engine E.

In this embodiment, the passive DeNOx control is particularly executed when the air-fuel ratio of the exhaust gas is shifted to the rich side due to the acceleration of the vehicle. Accordingly, the fuel injection amount that is required to bring the air-fuel ratio of the exhaust gas to the target DeNOx air-fuel ratio is smaller in the passive DeNOx control than in the active DeNOx control. Thus, in the case where the passive DeNOx control is executed at as high frequency as possible and a frequency of the active DeNOx control is reduced, it is possible to suppress degradation of fuel economy that is resulted from the DeNOx control.

In regard to fuel injection timing in the post injection, in this embodiment, the injection timing is changed in accordance with a mode of the DeNOx control. More specifically, when executing the active DeNOx control, the PCM 60 sets the injection timing to timing at which the fuel injected in the post injection is burned in the combustion chamber 17 of the engine E. Meanwhile, when executing the passive DeNOx control, the PCM 60 sets the injection timing to timing at which the fuel injected in the post injection is not burned in the combustion chamber 17 of the engine E and is discharged as unburned fuel to the exhaust passage 41.

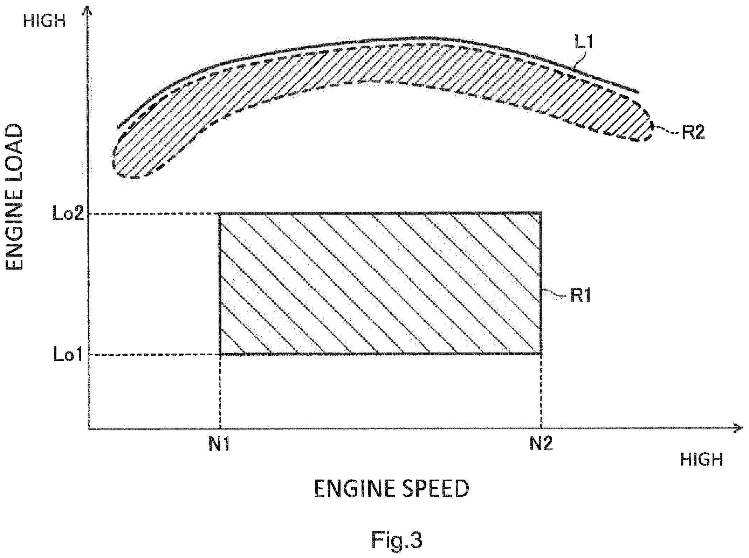

Here, a description will be made on an operating condition for executing each of the active DeNOx control and the passive DeNOx control with reference to Fig. 3. In Fig. 3, a horizontal axis represents the engine speed, and a vertical axis represents an engine load. In addition, in Fig. 3, a curve line L1 is a maximum torque line of the engine E.

In this embodiment, in the case where the engine load falls within an intermediate load range that is equal to or higher than a first specified load Lo1 and is lower than a second specified load Lo2 (> the first specified load Lo1) and the engine speed falls within an intermediate speed range that is equal to or higher than a first specified speed N1 and is lower than a second specified speed N2 (> the first specified speed N1), that is, in a first operation range R1 illustrated in Fig. 3, the PCM 60 particularly executes the active DeNOx control. This condition is set to suppress smoke and HC from being produced by causing ignition in a state where the air and the fuel are appropriately mixed. Accordingly, the ignition of the fuel injected in the post injection may be delayed effectively by introducing an appropriate amount of the EGR gas during the active DeNOx control, for example.

Note that a reason why the production of HC is suppressed during the active DeNOx control is to prevent HC from being recirculated as the EGR gas into the intake system IN and serving as a binder that binds with soot to close the passage for the EGR gas when the EGR gas is introduced just as described. An additional reason is to prevent unpurified HC from being discharged when the active DeNOx control is executed in such a range where the temperature of the NOx catalyst 45 is low and HC purification performance is not secured.

Meanwhile, in this embodiment, in the case where the engine load falls within a significantly higher range than the first operation range R1, that is, in a second operation range R2 illustrated in Fig. 3, the PCM 60 particularly executes the passive DeNOx control. This is because, when the engine load falls within the second operation range R2, the NOx catalyst 45 is usually at a temperature at which the HC purification performance by the DOC, which constitutes the NOx catalyst 45, is exerted, and thus the unburned fuel (HC) discharged to the exhaust passage 41 by the passive DeNOx control can sufficiently be purified by the NOx catalyst 45.

A description will be made on operation ranges other than the first and second operation ranges R1, R2. In a range where the engine load is higher than the first operation range R1 but is lower than the second operation range R2, an in-cylinder temperature of the engine E is high, and the air-fuel mixture is burned in a state where the air and the fuel are not appropriately mixed. Thus, the smoke and HC are likely to be produced. In a range where the engine load falls within the first operation range R1 and the engine speed is higher than the first operation range R1, time required for a stroke of the engine E is short. Accordingly, the air-fuel mixture is burned in the state where the air and the fuel are not appropriately mixed, and the smoke and HC are likely to be produced. Furthermore, in a range where the engine load is lower than the first operation range R1 and a range where the engine load falls within the first operation range R1 and the engine speed is lower than the first operation range R1, the temperature of the NOx catalyst 45 is likely to be lower than a temperature at which the NOx catalyst 45 can reduce stored NOx. From what has been described above, in this embodiment, the DeNOx control is not executed when the operation range of the engine E is that other than the first and second operation ranges R1, R2.

In the case where the operation range of the engine E is that other than the first and second operation ranges R1, R2 and the NOx storage amount is equal to or larger than the first specified storage amount described above, NOx is hardly purified by the NOx catalyst 45. However, in this embodiment, since the SCR catalyst 47 is provided on the downstream side of the NOx catalyst 45, NOx that is not purified by the NOx catalyst 45 can be purified by the SCR catalyst 47.

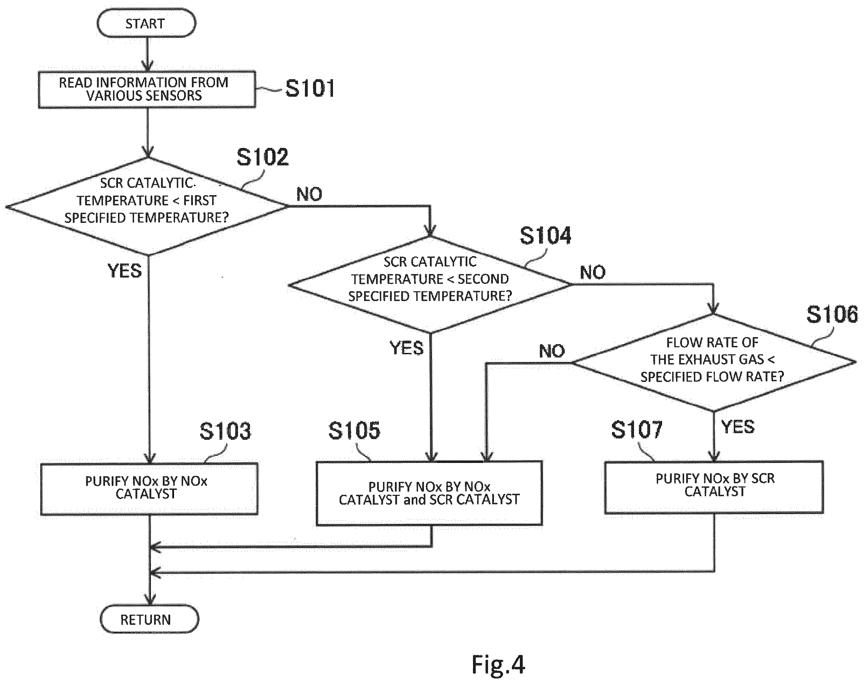

In this embodiment, whether to execute the DeNOx control as descried above is determined in accordance with whether NOx can be purified by the SCR catalyst 47 in addition to the above-described operation range of the engine E. This is because the DeNOx control does not have to be executed to secure the NOx purification performance of the NOx catalyst 45 when the SCR catalyst 47 can appropriately purify NOx in the exhaust gas. As described above, the NOx purification rate of the NOx catalyst 45 is high when the temperature of the exhaust gas is relatively low. Meanwhile, the NOx purification rate of the SCR catalyst 47 is high when the temperature of the exhaust gas is relatively high. Accordingly, in this embodiment, as illustrated in a flowchart of Fig. 4, the PCM 60 selects whether to execute the DeNOx control to purify NOx by using the NOx catalyst 45 or to purify NOx by using the SCR catalyst 47 in accordance with the SCR catalytic temperature.

A description will be made on processing by the PCM 60 that is particularly performed when the PCM 60 selects the catalyst for purifying the exhaust gas with reference to the flowchart in Fig. 4. During the actuation of the engine E, the PCM 60 performs the processing based on this flowchart constantly or at specified time intervals.

Initially, in step S101, the PCM 60 reads information from the various sensors 100 to 119, 150, and 151. In next step S102, the PCM 60 determines whether the SCR catalytic temperature is lower than a first specified temperature. If the determination in step S102 is YES, the processing proceeds to step S103. On the other hand, if the determination in step S102 is NO, the processing proceeds to step S104. Note that the first specified temperature is a temperature at which the SCR catalyst 47 can purify NOx but the NOx purification rate thereof is lower than a specified purification rate, and is 160 °C, for example.

In step S103, instead of purifying NOx by the SCR catalyst 47, the PCM 60 executes the DeNOx control to purify NOx by the NOx catalyst 45 only. In this step S103, the PCM 60 restricts the supply of urea by the urea injector 51 and thereby prevents the purification of NOx by the SCR catalyst 47. That is, to "prevent(s) the purification of NOx by the SCR catalyst 47" described herein means to "restrict (s) the supply of urea by the urea injector 51". After step S103, the processing returns.

In step S104, the PCM 60 determines whether the SCR catalytic temperature is lower than a second specified temperature (> the first specified temperature). If the determination in step S104 is YES, the processing proceeds to step S105. On the other hand, if the determination in step S104 is NO, the processing proceeds to step S106. Note that the second specified temperature is a temperature near a lower limit of a temperature range where the NOx purification rate of the SCR catalyst 47 can be equal to or higher than the specified purification rate, and is about 250 °C, for example.

In step S105, the PCM 60 executes the DeNOx control to purify NOx by the NOx catalyst 45, and also purifies NOx by the SCR catalyst 47. That is, in this step S105, the PCM 60 makes the urea injector 51 supply urea. After step S105, the processing returns.

In step S106, the PCM 60 determines whether a flow rate of the exhaust gas is lower than a specified flow rate. If the determination in step S106 is YES, the processing proceeds to step S107. On the other hand, if the determination in step S106 is NO, the processing proceeds to step S105. A reason why the determination is made on the flow rate of the exhaust gas in this step S106 is that, in the case where the operation state of the engine E falls within a high-speed, high-load operation range and thus the flow rate of the exhaust gas is high, for example, it may be impossible to purify NOx by the SCR catalyst 47 only even at the SCR catalytic temperature that is equal to or higher than the second specified temperature. In other words, if the flow rate of the exhaust gas is equal to or higher than the specified flow rate, that is, if the determination in step S106 is NO, both of the NOx catalyst 45 and the SCR catalyst 47 are preferably used to purify NOx. For this reason, the processing proceeds to step S105.

In step S107, instead of purifying NOx by the NOx catalyst 45, NOx is purified by the SCR catalyst 47 only. Also, in this step S107, the PCM 60 makes the urea injector 51 supply urea to the SCR catalyst 47. In this step S107, the execution of the DeNOx control is prohibited, and the NOx storage amount of the NOx catalyst 45 is brought to reach the storage limit. In this way, the purification of NOx by the NOx catalyst 45 is prevented. After step S107, the processing returns. Note that, in the case where the NOx storage amount of the NOx catalyst 45 does not reach the storage limit, the NOx catalyst 45 can store NOx. Accordingly, in this step S107, the NOx catalyst 45 possibly purifies (stores) NOx. That is, that "the purification of NOx by the NOx catalyst 45 is prevented" described herein means that "the execution of the DeNOx control is prohibited".

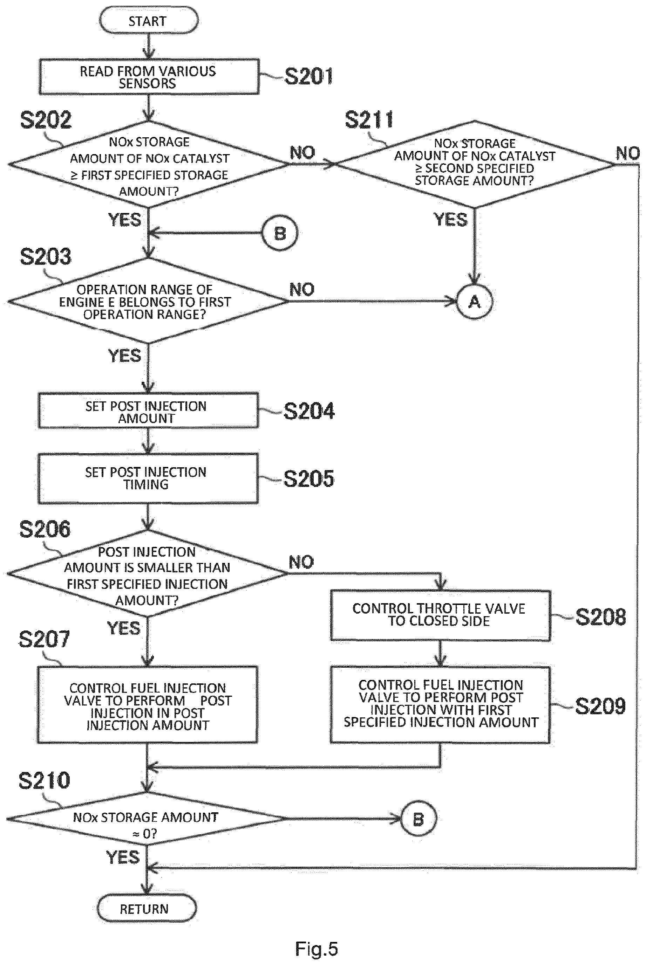

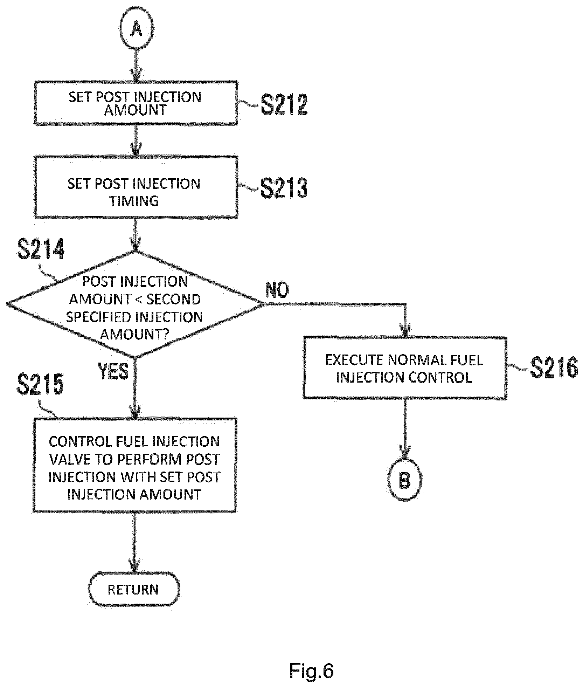

Next, a description will be made on a processing operation of the PCM 60 at the time of executing the DeNOx control with reference to Fig. 5 and Fig. 6. In the case where the PCM 60 executes the DeNOx control in accordance with the flowchart illustrated in Fig. 4, the PCM 60 particularly performs the processing operation that is based on flowcharts illustrated in Fig. 5 and Fig. 6.

Initially, in step S201, the PCM 60 reads the information from the various sensors 100 to 119, 150, and 151. In next step S202, the PCM 60 determines whether the NOx storage amount of the NOx catalyst 45 is equal to or larger than the first specified storage amount. If the determination in step S202 is YES, the processing proceeds to step S203. On the other hand, if the determination in step S202 is NO, the processing proceeds to step S211. Note that the NOx storage amount is calculated by estimating the amount of NOx in the exhaust gas on the basis of the operation state of the engine E, the flow rate of the exhaust gas, the temperature of the exhaust gas, and the like, for example, and integrating the estimated amounts of NOx.

In step S203, the PCM 60 determines whether the operation range of the engine E belongs to the first operation range R1. If the determination in step S203 is YES, the processing proceeds to step S204 in order to execute the active DeNOx control. On the other hand, if the determination in step S203 is NO, the processing proceeds to step S212.

In step S204, the PCM 60 sets the post injection amount. As described above, the post injection amount is set to the injection amount that is required to bring the air-fuel ratio of the exhaust gas to the target DeNOx air-fuel ratio on the basis of the concentration of oxygen in the air introduced into the engine E, the injection amount in the main injection, and the like.

In next step S205, the PCM 60 sets the post injection timing. As described above, in the active DeNOx control, the post injection timing is set to the timing at which the fuel injected in the post injection is burned in the combustion chamber 17 of the engine E.

In following step S206, the PCM 60 determines whether the post injection amount, which is calculated in above step S204, is smaller than a first specified injection amount. If the determination in step S206 is YES, the processing proceeds to step S207. On the other hand, if the determination in step S206 is NO, the processing proceeds to step S208. By setting this first specified injection amount, the degradation of the fuel economy, which is resulted from the execution of the DeNOx control, is suppressed.

In step S207, the PCM 60 controls the fuel injection valve 20 to perform the post injection in the post injection amount that is set in above step S205. After step S207, the processing proceeds to step S210.

Meanwhile, in step S208, the PCM 60 controls the throttle valve 7 to a closed side. In following step S209, the PCM 60 controls the fuel injection valve 20 to perform the post injection in the first specified injection amount. In these steps S208 and S209, in order to bring the air-fuel ratio of the exhaust gas to the target DeNOx air-fuel ratio by the post injection amount (in reality, a value of the first specified injection amount itself) that does not exceed the first specified injection amount, the opening amount of the throttle valve 7 is reduced, and the concentration of oxygen in the air that is introduced into the engine E is thereby reduced. After step S209, the processing proceeds to step S210.

In step S210, the PCM 60 determines whether the NOx storage amount substantially becomes 0. If the determination in step S210 is YES, the active DeNOx control is terminated, and the processing returns. On the other hand, if the determination in step S210 is NO, the processing returns to step S203. The determination on whether the NOx storage amount substantially becomes 0 in step S210 is made by integrating the post injection amounts and determining whether the integrated value thereof becomes a value with which the amount of stored NOx equal to or larger than the first specified storage amount can substantially become 0. Here, that "the NOx storage amount substantially becomes 0" includes that "the NOx storage amount becomes 0".

Meanwhile, in step S211, to which the processing proceeds if the determination in step S202 is NO, the PCM 60 determines whether the NOx storage amount of the NOx catalyst 45 is equal to or larger than the second specified storage amount. If the determination in step S211 is YES, the processing proceeds to step S212. On the other hand, if the determination in step S211 is NO, there is no need to execute the active DeNOx control and the passive DeNOx control, and thus the processing returns.

In step S212, the PCM 60 sets the post injection amount. Similar to above step S204, the post injection amount is set to the injection amount that is required to bring the air-fuel ratio of the exhaust gas to the target DeNOx air-fuel ratio on the basis of the concentration of oxygen in the air introduced into the engine E, the injection amount in the main injection, and the like.

In step S213, the PCM 60 sets the post injection timing. As described above, in the passive DeNOx control, the post injection timing is set to the timing at which the fuel injected in the post injection is not burned in the cylinder and is discharged as the unburned fuel to the exhaust passage 41.

In next step S214, the PCM 60 determines whether the post injection amount, which is calculated in above step S212, is smaller than a second specified injection amount. If the determination in step S214 is YES, the processing proceeds to step S215. On the other hand, if the determination in step S214 is NO, the processing proceeds to step S216. The second specified injection amount is set to such a value that is set only when the operation range of the engine E falls within the second operation range R2, and is a smaller value than the first specified injection amount. That is, in the case where the post injection amount is smaller than the second specified injection amount, the operation range of the engine E falls within the second operation range R2 where the passive DeNOx control can be executed.

In following step S215, the PCM 60 controls the fuel injection valve 20 to perform the post injection in the post injection amount that is set in above step S212. After step S215, the passive DeNOx control is terminated, and the processing returns.

In step S216, the PCM 60 does not execute the passive DeNOx control but executes the normal fuel injection control. That is, the PCM 60 controls the fuel injection valve 20 in a manner to only perform the main injection without performing the post injection. After step S216, the processing proceeds to step S203.

As it has been described so far, the DeNOx control is executed in this embodiment. In this way, NOx in the exhaust gas can appropriately be purified while the degradation of the fuel economy, which is resulted from the DeNOx control, is suppressed.

<Abnormality Determination of SCR Catalyst>

Next, a description will be made on the abnormality determination of the SCR catalyst 47.

The SCR catalyst 47 particularly purifies NOx by the (reduction) reaction of ammonia that is adsorbed by the SCR catalyst 47 with NOx in the exhaust gas. Ammonia that is adsorbed by the SCR catalyst 47 is basically produced when urea $((NH_2)_2CO)$ injected from the urea injector 51 is subjected to a thermal decomposition reaction or a hydrolysis reaction in the exhaust passage 41.

An injection amount of urea from the urea injector 51 (hereinafter simply referred to as a urea injection amount) is controlled by the DCU 70. More specifically, the DCU 70 sets the urea injection amount such that the ammonia adsorption amount of the SCR catalyst 47 becomes a target adsorption amount that is set in advance. In detail, the DCU 70 estimates the current ammonia adsorption amount of the SCR catalyst 47 by using a model and sets the urea injection amount on the basis of a difference between the target adsorption amount and the estimation value.

Although a detailed description will be made later, the current ammonia adsorption amount of the SCR catalyst 47 is particularly estimated from the urea injection amount, the amount of ammonia produced by the DeNOx control, a NOx inflow amount, and purification efficiency of the SCR catalyst 47 by using the model. In addition, the target adsorption amount is set to be smaller when the SCR catalytic temperature is high than when the SCR catalytic temperature is low. Furthermore, the target adsorption amount is set to a smaller value than an ammonia adsorption limit by the SCR catalyst 47.

The abnormality determination section 63 of the PCM 60 makes the abnormality determination of the SCR catalyst 47 on the basis of the actual NOx purification rate of the SCR catalyst 47. Particularly, the abnormality determination section 63 initially calculates the amount of NOx in the portion of the exhaust passage 41 on the upstream side of the SCR catalyst 47 (hereinafter referred to as an upstream-side NOx amount) on the basis of a detection result of the first NOx sensor 116, calculates the amount of NOx in the portion of the exhaust passage 41 on the downstream side of the SCR catalyst 47 (hereinafter referred to as a downstream-side NOx amount) on the basis of a detection result of the second NOx sensor 118, and calculates the actual purification rate of the SCR catalyst 47 on the basis of following Equation 1.

$$\texttt{Purification rate = 1 - (downstream-side NOx}$$

$$\texttt{amount / upstream-side NOx amount) ... (Equation 1)}$$

Next, when the purification rate that is calculated from Equation 1 is equal to or lower than the specified purification rate, the abnormality determination section 63 determines that there is a possibility that the SCR catalyst 47 is abnormal, and adds 1 to a failure count. Then, when the failure count becomes equal to or larger than a specified value, the abnormality determination section 63 determines that the SCR catalyst 47 is abnormal. That is, that the purification rate is equal to or lower than the specified purification rate and that the failure count is equal to or larger than the specified value correspond to the abnormality determination condition of the abnormality determination section 63.

In addition, when determining that the SCR catalyst 47 is abnormal, the abnormality determination section 63 particularly warns a vehicle occupant that the SCR catalyst 47 is abnormal. Such a warning is given by turning on a lamp provided at a position where the vehicle occupant can visually recognize the lamp, for example.

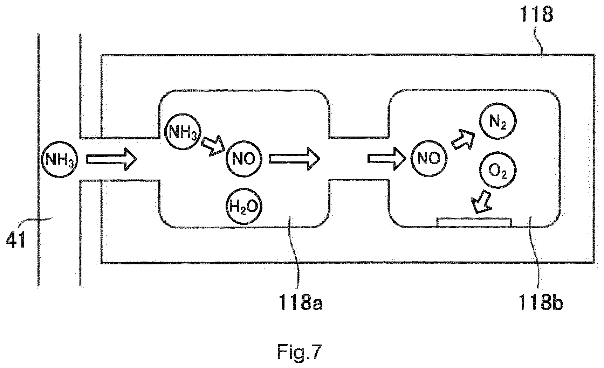

In order to accurately make the abnormality determination, in particular, the downstream-side NOx amount that is based on the detection result of the second NOx sensor 118 has to be calculated accurately. However, in general, the output value (the detection value) of the NOx sensor varies not only in accordance with NOx in the exhaust gas but also in accordance with ammonia in the exhaust gas. Accordingly, there is a case where the abnormality determination section 63 cannot accurately calculate the downstream-side NOx amount and consequently makes an erroneous determination. A description will hereinafter be made on principle of NOx detection by the NOx sensor with reference to Fig. 7.

Fig. 7 schematically illustrates the principle of the NOx detection. The second NOx sensor 118 is exemplified in this Fig. 7; however, the first NOx sensor 116 also has a similar configuration. As illustrated in Fig. 7, the second NOx sensor 118 has: a first cavity 118a that is connected to the exhaust passage 41; and a second cavity 118b that is connected to the first cavity 118a. Initially, HC and CO in the exhaust gas that has flowed into the second NOx sensor 118 are oxidized in the first cavity 118a, and the gas other than NOx is eliminated. Next, NOx that has flowed through the first cavity 118a is reduced to nitrogen in the next second cavity 118b. At this time, oxygen derived from NOx is produced in the second cavity 118b. In the second NOx sensor 118, the concentration of NOx is detected by detecting concentration of oxygen, which is produced in the second cavity 118b and is derived from NOx.

Here, in the case where the exhaust gas that has flowed into the second NOx sensor 118 contains ammonia, as illustrated in Fig. 7, ammonia in the exhaust gas is oxidized in the first cavity 118a and is decomposed to NOx and $H_2O$. As illustrated in Fig. 7, this ammonia-derived NOx is reduced and decomposed to nitrogen and oxygen in the second cavity 118b. Accordingly, the second NOx sensor 118 also detects ammonia-derived NOx as NOx in the exhaust gas. For this reason, the output value of the second NOx sensor 118 varies in accordance with NOx and ammonia in the exhaust gas.

Note that the output value of the first NOx sensor 116 also varies in accordance with ammonia in the exhaust gas. Although a detailed description will be made later, ammonia is also produced by the DeNOx control, and thus the first NOx sensor 116 detects ammonia as NOx in some cases. However, when the amount of ammonia produced by the DeNOx control is estimated and the upstream-side NOx amount is calculated on the basis of the estimation value and the detection result of the first NOx sensor 116, the upstream-side NOx amount can be calculated accurately.

Basically, when the DCU 70 particularly sets the target adsorption amount to an appropriate value, it is possible to suppress an amount of ammonia discharged into the portion of the exhaust passage 41 on the downstream side of the SCR catalyst 47 (hereinafter referred to as a slip amount of ammonia)to certain extent. However, the adsorption reaction and the desorption reaction of ammonia constantly occur in the SCR catalyst 47. Thus, in a situation where the desorption reaction is dominant, ammonia is discharged to the portion of the exhaust passage 41 on the downstream side of the SCR catalyst 47 (slippage of ammonia occurs). For this reason, there is a case where the downstream-side NOx amount cannot be calculated accurately from the detection result of the second NOx sensor 118.

In view of the above, in this embodiment, the slip amount of ammonia is estimated, and the abnormality determination by the abnormality determination section 63 is restricted on the basis of this estimated slip amount. Hereinafter, a detailed description will be made on a method for estimating the slip amount of ammonia.

The slip amount of ammonia that is based on the adsorption reaction and the desorption reaction of ammonia in the SCR catalyst 47 is primarily determined by a balance between an adsorption reaction rate and a desorption reaction rate of ammonia in the SCR catalyst 47. The adsorption reaction rate and the desorption reaction rate are respectively expressed by Equation 2 and Equation 3 below.

$$\text{Adsorption reaction rate} = Aa \times (1 - \theta) \times \exp(-Ea / RT) \times C1 \quad \ldots \quad (\text{Equation 2})$$

$$\text{Desorption reaction rate} = Ad \times \exp(-Ed / RT) \times \text{adsorption amount} \quad \ldots \quad (\text{Equation 3})$$

In Equation 2, Aa represents a frequency coefficient of the adsorption reaction, $\theta$ represents an ammonia coverage rate of the SCR catalyst 47, Ea represents activation energy required for the adsorption reaction, R represents a gas constant, T represents the SCR catalytic temperature, and C1 represents a correction coefficient based on concentration of ammonia in the exhaust gas. Each of the frequency coefficient Aa and the activation energy Ea is a constant that is calculated from an experiment or a simulation. The coverage rate $\theta$ is a value that is acquired by dividing the current ammonia adsorption amount of the SCR catalyst 47 by the adsorption limit (a constant value, herein) of the SCR catalyst 47, and is a variable possibly acquiring a value that is equal to or larger than 0 and is equal to or smaller than 1. Meanwhile, in Equation 3, Ad represents a frequency coefficient of the desorption reaction, Ed represents activation energy required for the desorption reaction, R represents the gas constant, and T represents the SCR catalytic temperature. Each of the frequency coefficient Ad and the activation energy Ed is a constant that is calculated from an experiment or a simulation. The adsorption amount is the ammonia adsorption amount of the SCR catalyst 47.

The adsorption reaction of ammonia to the SCR catalyst 47 is a reaction in which ammonia is simply adsorbed to an acid center of the SCR catalyst 47. Meanwhile, the desorption reaction of ammonia from the SCR catalyst 47 is a reaction in which adsorbed ammonia is removed from the acid center of the SCR catalyst 47. Accordingly, the activation energy Ed for the desorption reaction is significantly higher than the activation energy Ea for the adsorption reaction. That is, while the adsorption reaction rate is unlikely to be influenced by the SCR catalytic temperature, the desorption reaction rate is likely to be influenced by the SCR catalytic temperature.

The correction coefficient, which is based on the concentration of ammonia in the exhaust gas, has an influence on the final slip amount of ammonia. However, the correction coefficient does not have a significant influence on the adsorption reaction rate when compared to the ammonia coverage rate of the SCR catalyst 47, that is, the ammonia adsorption amount of the SCR catalyst 47.

Accordingly, while the adsorption reaction rate primarily depends on the ammonia coverage rate of the SCR catalyst 47 (that is, the ammonia adsorption amount of the SCR catalyst 47), the desorption reaction rate primarily depends on the ammonia adsorption amount of the SCR catalyst 47 and the SCR catalytic temperature. Therefore, the ammonia adsorption amount of the SCR catalyst 47 and the SCR catalytic temperature have to be taken into consideration for the slip amount of ammonia, which is determined by the balance between the adsorption reaction rate and the desorption reaction rate. In view of this, in this embodiment, the ammonia adsorption amount estimation section 61 estimates the ammonia adsorption amount of the SCR catalyst 47, and the catalytic temperature sensor 117 detects the SCR catalytic temperature. Then, on the basis of the ammonia adsorption amount estimated by the ammonia adsorption amount estimation section 61 and the SCR catalytic temperature detected by the catalytic temperature sensor 117, the slip amount estimation section 62 estimates the slip amount of ammonia that is the amount of ammonia discharged into the portion of the exhaust passage 41 on the downstream side of the SCR catalyst 47.

Here, in this embodiment, the ammonia adsorption amount estimation section 61 particularly estimates the ammonia adsorption amount of the SCR catalyst 47 on the basis of at least one of the urea injection amount, the amount of ammonia produced by the DeNOx control, the NOx inflow amount into the SCR catalyst 47, and the purification efficiency of the SCR catalyst 47. Particularly, the ammonia adsorption amount estimation section 61 initially calculates the amount of ammonia that has flowed into the SCR catalyst 47 on the basis of the urea injection amount and the amount of ammonia produced by the DeNOx control. Ammonia produced by the DeNOx control is ammonia that is discharged from the NOx catalyst 45 to the exhaust gas when NOx stored in the NOx catalyst 45 is reduced, and is produced by a reaction of stored NOx in the NOx catalyst 45 with HC supplied by the post injection. Thus, ammonia produced by the DeNOx control can be estimated from the NOx storage amount of the NOx catalyst 45 and the post injection amount. Next, the ammonia adsorption amount estimation section 61 calculates the amount of ammonia that is consumed in the SCR catalyst 47 on the basis of the NOx inflow amount into the SCR catalyst 47 and the purification efficiency of the SCR catalyst 47. The NOx inflow amount into the SCR catalyst 47 is calculated on the basis of the detection result of the first NOx sensor 116 and the estimation value of ammonia produced by the DeNOx control. The purification efficiency of the SCR catalyst 47 is calculated by reading a theoretical value, which is calculated in advance on the basis of the SCR catalytic temperature, the flow rate of the exhaust gas, and the like, from a map stored in the PCM 60. Then, the ammonia adsorption amount estimation section 61 estimates the current ammonia adsorption amount of the SCR catalyst 47 from a difference between an integrated value of the amounts of ammonia that has flowed into the SCR catalyst 47 and an integrated value of the amounts of ammonia consumed in the SCR catalyst 47. Hereinafter, the ammonia adsorption amount of the SCR catalyst 47 that is estimated by the ammonia adsorption amount estimation section 61 will be referred to as an estimated ammonia adsorption amount.

Note that, when the DeNOx control is not executed, the ammonia adsorption amount estimation section 61 does not take the amount of ammonia produced by the DeNOx control into consideration for the estimation of the ammonia adsorption amount of the SCR catalyst 47.

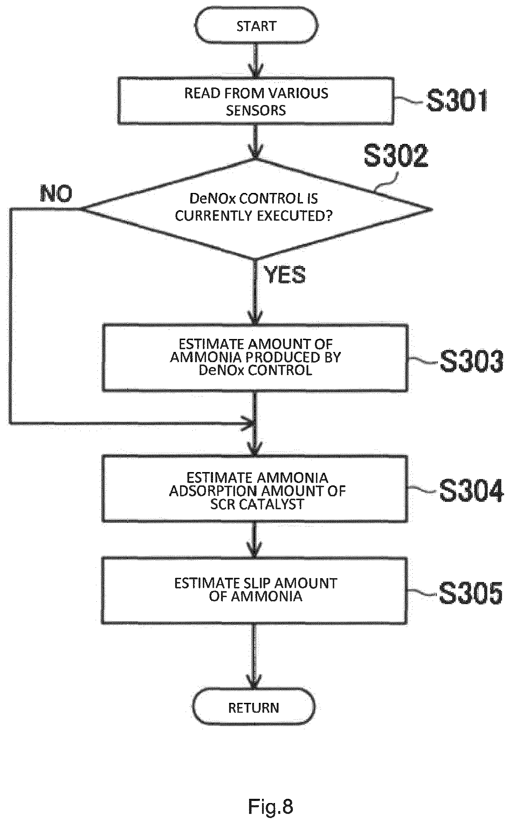

Fig. 8 particularly illustrates a processing operation of the PCM 60 at the time of estimating the slip amount of ammonia from the SCR catalyst 47. Note that the ammonia adsorption amount of the SCR catalyst 47 is estimated by the ammonia adsorption amount estimation section 61 and the slip amount of ammonia from the SCR catalyst 47 is estimated by the slip amount estimation section 62.

Initially, in step S301, the PCM 60 reads the information from the various sensors 100 to 119, 150, and 151. In this step S301, the SCR catalytic temperature is particularly detected by the catalytic temperature sensor 117.

In next step S302, the PCM 60 particularly determines whether the DeNOx control is currently executed. If the determination in this step S302 is YES, the processing proceeds to step S303. On the other hand, if the determination in this step S302 is NO, the processing proceeds to step S304.

In next step S303, the PCM 60 estimates the amount of ammonia produced by the DeNOx control.

In step S304, the PCM 60 estimates the ammonia adsorption amount of the SCR catalyst 47.

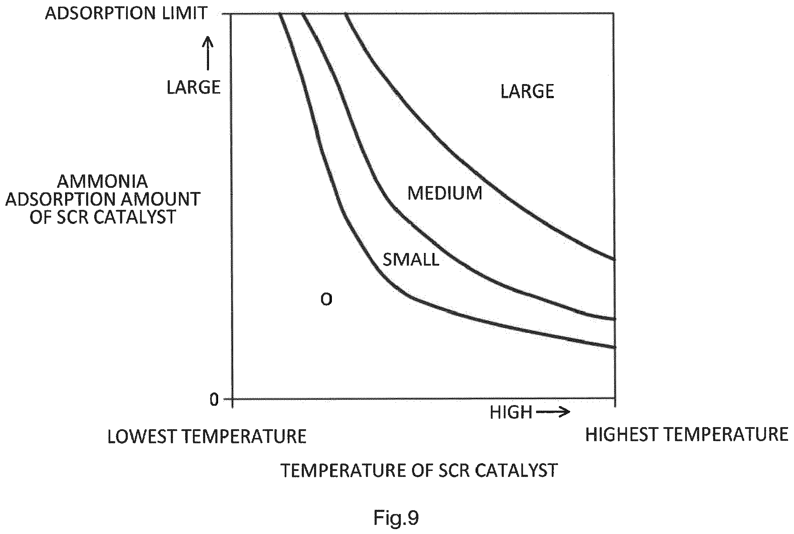

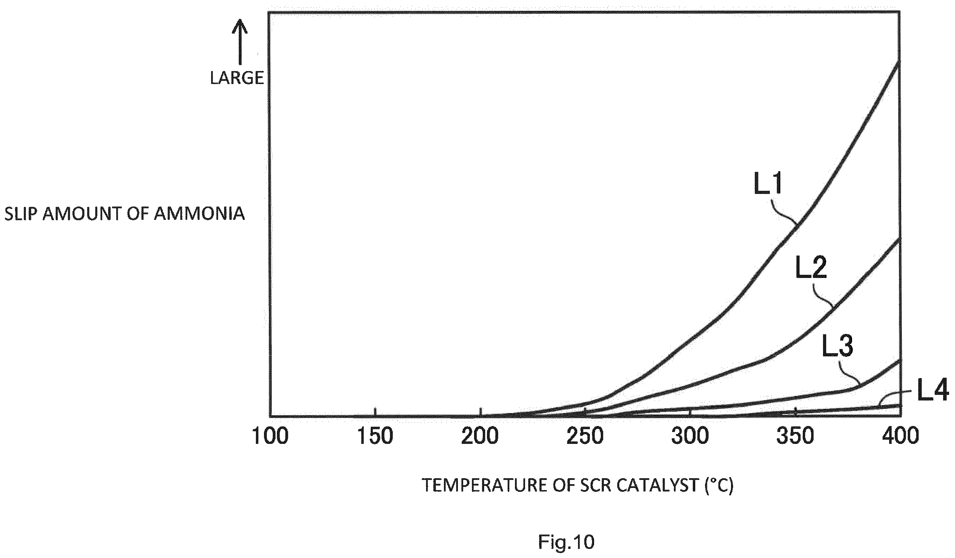

Then, in step S305, the PCM 60 estimates the slip amount of ammonia from the SCR catalyst 47 on the basis of the estimated ammonia adsorption amount estimated in above step S304 and the SCR catalytic temperature detected by the catalytic temperature sensor 117 in above step S301. In detail, the PCM 60 estimates the slip amount of ammonia from the SCR catalyst 47 by applying the estimated ammonia adsorption amount and the SCR catalytic temperature to a map illustrated in Fig. 9 and a map illustrated in Fig. 10. After step S305, the processing returns.

Fig. 9 is particularly a map that is created based on a result of calculating the slip amount of ammonia at the time when the ammonia adsorption amount of the SCR catalyst 47 and the SCR catalytic temperature are changed in an experiment. Although a detailed description will be made later, the correction coefficient that is based on the concentration of ammonia in the exhaust gas is set to 1. In Fig. 9, a vertical axis represents the ammonia adsorption amount of the SCR catalyst 47, and a horizontal axis represents the SCR catalytic temperature. A lower limit value of the vertical axis is 0, and an upper limit value of the vertical axis is the ammonia adsorption limit of the SCR catalyst 47. The horizontal axis is set to have a temperature range where the SCR catalyst 47 is used, the lowest temperature thereof is set to 160°C, and the highest temperature thereof is set to 400°C. "SMALL", "MEDIUM", and "LARGE" in Fig. 9 each indicates the slip amount of ammonia, and the slip amount of ammonia is increased in an order of "SMALL", "MEDIUM", and "LARGE". Here, in the case where the slip amount of ammonia is equal to or larger than a specified slip amount, in detail, in the case where the slip amount of ammonia is equal to or larger than an amount that influences the detection of the concentration of NOx by the second NOx sensor 118 to such extent that the abnormality determination section 63 makes an erroneous determination, the slip amount of ammonia is determined as " SMALL", "MEDIUM", and "LARGE" in accordance with the amount. In addition, "0" in Fig. 9 indicates no slippage of ammonia or that the slip amount of ammonia is smaller than the amount that influences the detection of the concentration of NOx by the second NOx sensor 118 to such extent that the abnormality determination section 63 makes the erroneous determination.

Note that the highest temperature at which the SCR catalyst 47 can be used means the highest temperature that the SCR catalyst 47 possibly reaches, and corresponds to the SCR catalytic temperature at the time when the operation range of the engine E is the high-rotation, high-load operation range.

As illustrated in Fig. 9, it is understood that, in the temperature range where the SCR catalyst 47 can be used, the slip amount of ammonia is increased as the estimated ammonia adsorption amount and the SCR catalytic temperature are increased. In addition, as illustrated in Fig. 9, it is understood that, when the SCR catalytic temperature is the highest temperature, the slippage of ammonia occurs with the small ammonia adsorption amount of the SCR catalyst 47.

Furthermore, as illustrated in Fig. 9, it is understood that, when the ammonia adsorption amount of the SCR catalyst 47 is near the adsorption limit, the slippage of ammonia occurs even at the low SCR catalytic temperature. In this embodiment, a temperature at which the slip amount of ammonia becomes equal to or larger than the specified slip amount at the time when the ammonia adsorption amount of the SCR catalyst 47 corresponds to the adsorption limit is approximately 200°C. That is, the slip amount of ammonia exceeds the specified slip amount when the ammonia adsorption amount of the SCR catalyst 47 is the largest and the SCR catalytic temperature is the second specified temperature (for example, about 250°C).

Fig. 10 particularly is a map that represents the slip amount of ammonia with respect to the SCR catalytic temperature. A vertical axis represents the slip amount of ammonia, and a horizontal axis represents the SCR catalytic temperature. In curve lines L1 to L4 in Fig. 10, the ammonia adsorption amount of the SCR catalyst 47 differs from each other. More specifically, the curve line L1 is a curve line with the largest ammonia adsorption amount of the curve lines L1 to L4, and the curve line L4 is a curve line with the smallest ammonia adsorption amount of the curve lines L1 to L4. In regard to the curve lines L2, L3, when the ammonia adsorption amount between the curve line L1 and the curve line L4 is equally divided into three, a curve line with the relatively large ammonia adsorption amount is the curve line L2, and a curve line with the relatively small ammonia adsorption amount is the curve line L3.

As illustrated in Fig. 9 and Fig. 10, it is understood that, in the temperature range where the SCR catalyst 47 can be used, the slip amount of ammonia becomes substantially 0 when the SCR catalytic temperature is equal to or lower than a third specified temperature. This is because, when the SCR catalytic temperature is low, the value of $\exp(-Ed / RT)$ in Equation 3 is small, and thus the desorption reaction rate is low and unlikely to be higher than the adsorption reaction rate. Accordingly, in this embodiment, the slip amount estimation section 62 is configured to estimate the slip amount of ammonia as substantially 0 when the SCR catalytic temperature is lower than the third specified temperature. Note that the third specified temperature is approximately 200°C. In addition, that "estimate the slip amount of ammonia as substantially 0" includes such a case that "estimate the slip amount of ammonia as 0".

In addition, as illustrated in Fig. 10, it is understood that, under a condition that the ammonia adsorption amount of the SCR catalyst 47 is the same in the temperature range where the SCR catalyst 47 can be used and the slippage of ammonia occurs, an increase in the slip amount of ammonia with respect to an increase in the SCR catalytic temperature (that is, slopes of the curve lines in Fig. 10) is larger when the SCR catalytic temperature is high than when the SCR catalytic temperature is low. Under the condition that the ammonia adsorption amount of the SCR catalyst 47 is the same, the adsorption reaction rate is almost constant (due to the small influence of the SCR catalytic temperature). Thus, a change in the desorption reaction rate, in particular, a change in the value of $\exp(-Ed / RT)$ in Equation 3 is reflected to a change in the slip amount of ammonia. In general, in the case where the activation energy Ed is high, the value of $\exp(-Ed / RT)$ is hardly changed in a range where the SCR catalytic temperature T is low. However, once the SCR catalytic temperature T is increased to certain extent, the value of $\exp(-Ed / RT)$ is rapidly increased with the increase in the SCR catalytic temperature T. Thereafter, the change in the value of $\exp(-Ed / RT)$ exhibits a saturated state. In Fig. 10, the value of $\exp(-Ed / RT)$ is not changed in the saturated manner. This is because it is considered that the temperature range where the SCR catalyst 47 can be used does not belong to the range where the change in the value of $\exp(-Ed / RT)$ exhibits the saturated state but remains in the range where the change in the value of $\exp(-Ed / RT)$ exhibits the rapid increase with the increase in the SCR catalytic temperature T. From what have been described so far, in this embodiment, the slip amount estimation section 62 is configured to estimate the slip amount of ammonia such that the increase in the slip amount of ammonia with respect to the increase in the SCR catalytic temperature is larger when the SCR catalytic temperature is high than when the SCR catalytic temperature is low in the case where the slip amount estimation section 62 compares the SCR catalytic temperatures in the temperature range where the SCR catalyst 47 can be used by using the same estimated ammonia adsorption amount.

Furthermore, as illustrated in Fig. 10, it is understood that, under a condition that the SCR catalytic temperature is the same temperature within the temperature range where the SCR catalyst 47 can be used, the slip amount of ammonia is increased as the ammonia adsorption amount of the SCR catalyst 47 is increased. This is because the adsorption reaction rate and the desorption reaction rate primarily depend on the ammonia adsorption amount of the SCR catalyst 47 under the condition that the SCR catalytic temperature is the same; however, the desorption reaction rate is increased with respect to the adsorption reaction rate as the ammonia adsorption amount of the SCR catalyst 47 is increased. Accordingly, in this embodiment, the slip amount estimation section 62 is configured to estimate the larger slip amount of ammonia as the ammonia adsorption amount of the SCR catalyst 47 is increased in the case where the slip amount estimation section 62 compares the slip amount of ammonia at the same SCR catalytic temperature in the temperature range where the SCR catalyst 47 can be used. In particular, in this embodiment, the slip amount estimation section 62 is configured to estimate the larger slip amount of ammonia as the ammonia adsorption amount of the SCR catalyst 47 approaches the adsorption limit of the SCR catalyst 47.

Moreover, as illustrated in Fig. 10, it is understood that, under the condition that the SCR catalytic temperature is the same temperature within the temperature range where the SCR catalyst 47 can be used, the increase in the slip amount of ammonia with respect to the increase in the ammonia adsorption amount of the SCR catalyst 47 is larger when the ammonia adsorption amount of the SCR catalyst 47 is large than when the ammonia adsorption amount of the SCR catalyst 47 is small. Accordingly, in this embodiment, the slip amount estimation section 62 is configured to estimate the slip amount of ammonia such that the increase in the slip amount of ammonia with respect to an increase in the estimated ammonia adsorption amount is larger when the estimated ammonia adsorption amount is large than when the estimated ammonia adsorption amount is small in the case where the slip amount estimation section 62 compares the estimated ammonia adsorption amounts at the same SCR catalytic temperature within the temperature range where the SCR catalyst 47 can be used. In particular, in this embodiment, the slip amount estimation section 62 is configured to estimate the slip amount of ammonia such that the increase in the slip amount of ammonia with respect to the increase in the estimated ammonia adsorption amount is increased as the estimated ammonia adsorption amount of the SCR catalyst 47 approaches the adsorption limit of the SCR catalyst 47.

Here, as expressed in above Equation 2, the adsorption reaction rate varies more or less in accordance with the concentration of ammonia in the exhaust gas. Accordingly, in order to accurately estimate the slip amount of ammonia, it is preferred to consider the correction coefficient that is based on the concentration of ammonia in the exhaust gas. Thus, in this embodiment, the numerical value (the slip amount of ammonia) that constitutes the map in Fig. 9 is multiplied by the correction coefficient based on the concentration of ammonia in the exhaust gas.

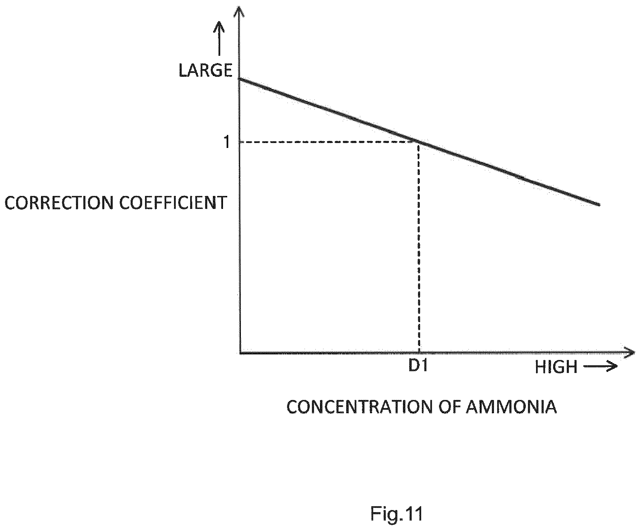

Fig. 11 is particularly a map that represents a relationship between the concentration of ammonia in the exhaust gas and the correction coefficient based thereon. As described above, the concentration of ammonia in the exhaust gas is a parameter that influences the adsorption reaction rate. More specifically, when the concentration of ammonia in the exhaust gas is low, the adsorption reaction is suppressed, and thus the adsorption reaction rate is low. Accordingly, as illustrated in Fig. 11, the correction coefficient, which is based on the concentration of ammonia in the exhaust gas, is a correction coefficient that is increased as the concentration of ammonia is reduced. In this embodiment, the correction coefficient is set to 1 when concentration of ammonia D1 is located at the middle between the highest concentration of ammonia that the engine system 200 possibly acquires and 0. Then, when the concentration of ammonia is higher than D1, the correction coefficient is reduced from 1. On the other hand, when the concentration of ammonia is lower than D1, the correction coefficient is increased from 1. This correction coefficient varies within a range that is larger than 0 and smaller than 2. Note that the PCM 60 estimates the concentration of ammonia in the exhaust gas flow on the basis of the flow rate of the exhaust gas, the urea injection amount, and the amount of ammonia produced by the DeNOx control. In addition, a value of D1 is set in accordance with the actual engine system in an experiment or the like.

As it has been described so far, the slip amount estimation section 62 estimates the slip amount of ammonia, and the parameter that influences the adsorption reaction rate and the desorption reaction rate of ammonia is taken into consideration. Therefore, it is possible to improve the estimation accuracy of the slip amount of ammonia from the SCR catalyst 47.

The abnormality determination restriction section 64 of the PCM 60 particularly receives the estimated slip amount of ammonia that is estimated by the slip amount estimation section 62. In the case where the estimated slip amount of ammonia is equal to or larger than the specified slip amount, in detail, in the case where the estimated slip amount of ammonia is equal to or larger than the amount that influences the detection of the concentration of NOx by the second NOx sensor 118 to such extent that the abnormality determination section 63 makes the erroneous determination, the abnormality determination restriction section 64 restricts the abnormality determination of the SCR catalyst 47 by the abnormality determination section 63. More specifically, in the case where the estimated slip amount of ammonia is the specified slip amount, the abnormality determination restriction section 64 stops the abnormality determination so as to prevent the abnormality determination section 63 from making the failure count even when the purification rate, which is calculated by the abnormality determination section 63 using above Equation 1, is equal to or lower than the specified purification rate. In this way, even when it is determined that the purification rate of the SCR catalyst 47 is equal to or lower than the specified purification rate due to slipped ammonia from the SCR catalyst 47, the abnormality determination section 63 can be avoided from determining the failure of the SCR catalyst 47. Accordingly, the abnormality determination section 63 can determine the failure of the SCR catalyst 47 in a situation where the downstream-side NOx amount can be calculated accurately. Therefore, the abnormality determination section 63 can be suppressed from making the erroneous determination.

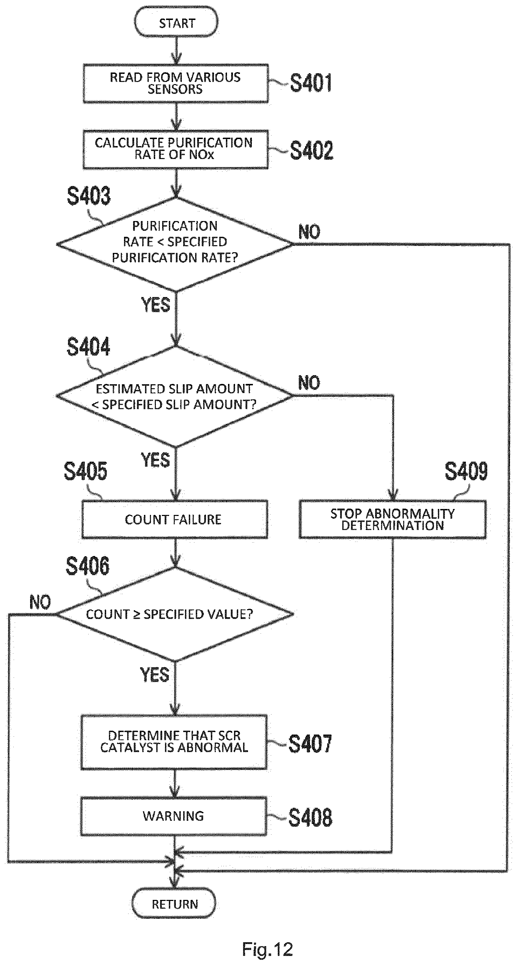

Next, a description will be made on a processing operation of the PCM 60 at the time of making the abnormality determination of the SCR catalyst 47 with reference to Fig. 12. In the processing operation, which will be described below, control related to the abnormality determination of the SCR catalyst 47 is particularly executed by the abnormality determination section 63 of the PCM 60, and control related to the restriction of the abnormality determination is executed by the abnormality determination restriction section 64 thereof. The abnormality determination based on this flowchart is made at specified time intervals while the SCR catalyst 47 can be used (while the SCR catalytic temperature is equal to or higher than the first specified temperature).

Initially, in step S401, the PCM 60 reads the information from the various sensors 100 to 119, 150, and 151. In next step S402, the PCM 60 calculates the NOx purification rate of the SCR catalyst 47.

In next step S403, the PCM 60 determines whether the NOx purification rate of the SCR catalyst 47, which is calculated in above step S402, is lower than the specified purification rate. If the determination in this step S403 is YES, the processing proceeds to step S404. On the other hand, if the determination in this step S403 is NO, it is determined that the SCR catalyst 47 is normal, and the processing returns.

In step S404, the PCM 60 determines whether the estimated slip amount of ammonia is smaller than the specified slip amount. If the determination in step S404 is YES, the processing proceeds to step S405. On the other hand, if the determination in step S404 is NO, the processing proceeds to step S409. Note that this estimated slip amount of ammonia is estimated on the basis of the flowchart illustrated in Fig. 8.

In step S405, the PCM 60 adds 1 to the failure count. In next step S406, the PCM 60 determines whether the failure count is equal to or larger than the specified value. If the determination in step S406 is YES, the processing proceeds to step S407. On the other hand, if the determination in step S406 is NO, it is determined that the abnormality determination is currently made, and the processing returns.

In step S407, the PCM 60 determines that the SCR catalyst 47 is abnormal. In next step S408, the PCM 60 warns the vehicle occupant. After step S408, the processing returns.

On the other hand, in step S409 to which the processing proceeds if the determination in step S404 is NO, the PCM 60 stops the abnormality determination, and the processing returns.

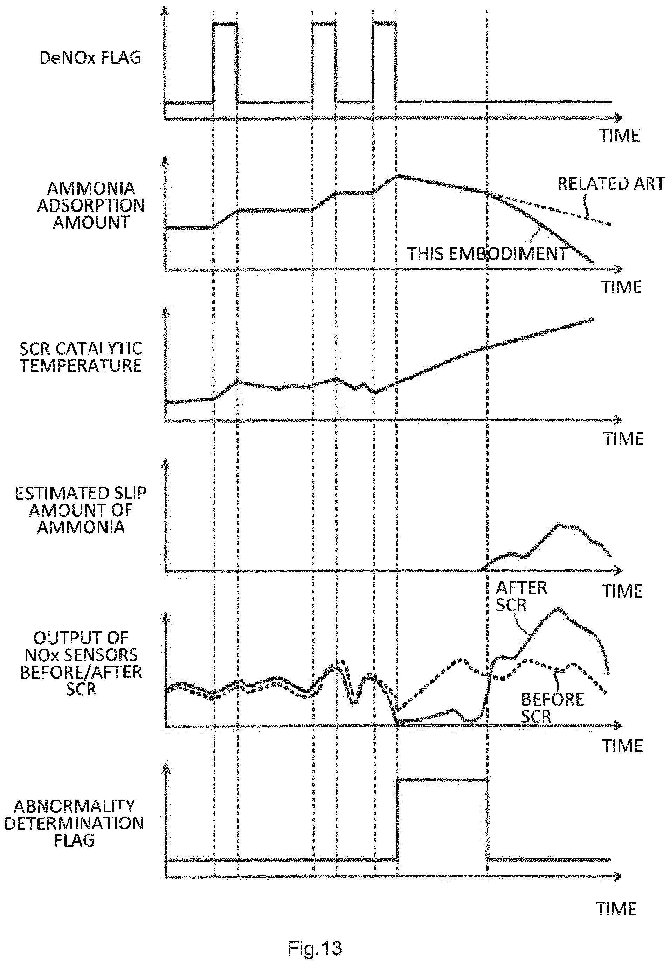

A description will be made on a change in each of the parameters (the estimated slip amount and the like) at the time when the PCM 60 makes the abnormality determination by using a time chart in Fig. 13. Note that, in Fig. 13, the ammonia adsorption amount is the value that is estimated by the ammonia adsorption amount estimation section 61 of the PCM 60 and the slip amount of ammonia is the value that is estimated by the slip amount estimation section 62 of the PCM 60. In addition, in regard to the output value of the NOx sensor, a broken line represents the output value of the first NOx sensor 116, and a solid line represents the output value of the second NOx sensor 118.

Initially, in an initial state, the PCM 60 executes the normal fuel injection control, and the SCR catalyst 47 is in a nonactivated state. When the DeNOx control is executed in this initial state, ammonia is produced in conjunction with the execution of the DeNOx control. Thus, the ammonia adsorption amount of the SCR catalyst 47 is increased. Thereafter, when the DeNOx control is executed in a state where the SCR catalytic temperature is lower than the first specified temperature, that is, NOx is not purified by the SCR catalyst 47, ammonia is not consumed by the SCR catalyst 47, and thus the ammonia adsorption amount of the SCR catalyst 47 is further increased.

When the SCR catalytic temperature becomes equal to or higher than the first specified temperature, the SCR catalyst 47 starts purifying NOx. Thus, the ammonia adsorption amount of the SCR catalyst 47 starts being reduced. At the same time, the abnormality determination of the SCR catalyst 47 is initiated. Meanwhile, since NOx flows through the portion of the exhaust passage 41 on the downstream side of the NOx catalyst 45, the output value of the first NOx sensor 116 is increased.

Once the temperature of the SCR catalyst 47 is increased, the slippage of ammonia occurs. Accordingly, the output value of the second NOx sensor 118 is increased. Thereafter, when the slip amount of ammonia becomes equal to or larger than the specified slip amount, the PCM 60 stops the abnormality determination of the SCR catalyst 47. In this way, as illustrated in Fig. 13, it is possible to prevent the abnormality determination from being made in a state where the output value of the second NOx sensor 118 exceeds the output value of the first NOx sensor 116. Note that, when the slip amount of ammonia becomes smaller than the specified slip amount, the PCM 60 initiates the abnormality determination of the SCR catalyst 47 again.

In addition, as illustrated in Fig. 13, the PCM 60 particularly estimates the smaller ammonia adsorption amount when the slippage of ammonia occurs than when the slippage of ammonia does not occur. This is because the desorption reaction of ammonia from the SCR catalyst 47 is prominent when the slippage of ammonia occurs. Thus, the ammonia adsorption amount of the SCR catalyst 47 is estimated to look smaller when the slippage of ammonia occurs than when the slippage of ammonia does not occur. In this way, estimation accuracy of the ammonia adsorption amount of the SCR catalyst 47 is improved, which further improves the estimation accuracy of the slip amount of ammonia.

Accordingly, in this embodiment, the slip amount of ammonia is estimated such that the increase in the slip amount of ammonia with respect to the increase in the SCR catalytic temperature is larger when the SCR catalytic temperature is high than when the SCR catalytic temperature is low in the case where the SCR catalytic temperatures are compared by using the same estimated ammonia adsorption amount. Thus, the parameters that influence the adsorption reaction rate and the desorption reaction rate of ammonia by the SCR catalyst 47 are taken into consideration. Therefore, it is possible to improve the estimation accuracy of the slip amount of ammonia from the SCR catalyst 47.

The technique disclosed herein is not limited to that in the above-described embodiment and can be substituted with another technique within the scope that does not depart from the gist of the claims.

For example, in the above-described embodiment, the correction coefficient that is based on the concentration of ammonia in the exhaust gas is only taken into consideration as the correction coefficient for the map illustrated in Fig. 9. However, in addition to this, the correction coefficient that is based on the flow rate of the exhaust gas, deterioration of the SCR catalyst 47, the concentration of oxygen in the exhaust gas flow, or the like may be taken into consideration. Here, the numerical values constituting the map in Fig. 9 can be multiplied by any of these correction coefficients or can be added with any of these correction coefficients.

In addition, in the above-described embodiment, the urea injector 51 supplies urea as the precursor of ammonia. However, it may be configured to directly supply ammonia.

Furthermore, in the above-described embodiment, the description has been made on the case where the estimated slip amount of ammonia from the SCR catalyst 47 is used for the abnormality determination of the SCR catalyst 47. However, the estimated slip amount of ammonia from the SCR catalyst 47 may also be used to calculate the urea injection amount by the urea injector 51, determine the purification rate of the slip catalyst 48, and the like, for example. That is, the estimated slip amount of ammonia from the SCR catalyst 47 can also be used for purposes other than the abnormality determination of the SCR catalyst 47.

Moreover, in the above-described embodiment, in the abnormality determination of the PCM 60, it is determined whether the purification rate of the SCR catalyst 47 is lower than the specified purification rate (step S403), and thereafter it is determined whether the estimated slip amount of ammonia is smaller than the specified slip amount (step S404) . However, the present disclosure is not limited thereto. It may be determined whether the estimated slip amount of ammonia is smaller than the specified slip amount before the calculation of the purification rate of the SCR catalyst 47 and the determination based on the purification rate. In this case, when the estimated slip amount of ammonia is equal to or larger than the specified slip amount, the processing operation of the PCM 60 becomes such a processing operation that the purification rate of the SCR catalyst 47 is not calculated, the determination based on the purification rate is not made, and the processing returns as is.

The above-described embodiment is merely illustrative, and thus the scope of the present disclosure should not be interpreted in a restrictive manner. The scope of the present disclosure is defined by the claims.

[Industrial Applicability]

The technique disclosed herein is useful when an exhaust gas state of the engine is determined, and the engine includes: the NOx selective reduction catalyst that is provided in the exhaust passage of the engine and reduces NOx by using the supplied reducing agent; and the reducing agent supplier capable of supplying ammonia or the precursor of ammonia as the reducing agent to the NOx selective reduction catalyst.

[Description of Reference Signs and Numerals]

41: Exhaust passage
45: NOx catalyst (NOx storage catalyst)
47: SCR catalyst (NOx selective reduction catalyst)
51: Urea injector (reducing agent supplier)
60: PCM
61: Ammonia adsorption amount estimation section (ammonia adsorption amount estimator)
62: Slip amount estimation section (slip amount estimator)
63: Abnormality determination section (abnormality determiner)
64: Abnormality determination restriction section (abnormality determination restrictor)
117: Catalytic temperature sensor (catalytic temperature detector)
118: Second NOx sensor (NOx sensor whose output value varies in accordance with amount of NOx and amount of ammonia in exhaust gas)
E: Engine

**Claims**

1. A method of determining an exhaust gas state of an engine (E), wherein the engine (E) includes a NOx selective reduction catalyst (47) that is provided in an exhaust passage (41) of the engine (E) and reduces NOx by using a supplied reducing agent, and a reducing agent supplier (51) capable of supplying ammonia or a precursor of ammonia as the reducing agent to the NOx selective reduction catalyst (47), the method comprising:

   an ammonia adsorption amount estimation step of estimating an ammonia adsorption amount of the NOx selective reduction catalyst (47);
   a catalytic temperature detection step of detecting a temperature of the NOx selective reduction catalyst (47); and
   a slip amount estimation step of estimating a slip amount of ammonia, that is an amount of ammonia discharged into a portion of the exhaust passage (41) on a downstream side of the NOx selective reduction catalyst (47), on the basis of the estimated ammonia adsorption amount that is estimated in the ammonia adsorption amount estimation step and the detected catalytic temperature that is detected in the catalytic temperature detection step, wherein
   the slip amount of ammonia is estimated such that an increase in the slip amount of ammonia with respect to an increase in the detected catalytic temperature is larger as the detected catalytic temperature is higher.

2. The method according to claim 1, wherein
   in the slip amount estimation step, the slip amount of ammonia is estimated such that an increase in the slip amount of ammonia with respect to an increase in the detected catalytic temperature is larger when the detected catalytic temperature is high than when the detected catalytic temperature is low in the case where the detected catalytic temperatures are compared by using the same estimated ammonia adsorption amount.

3. The method according to claim 1 or 2, wherein
   in the slip amount estimation step, the slip amount of ammonia is estimated as substantially 0 when the detected catalytic temperature is lower than a specified temperature.

4. The method according to any one of the preceding claims, wherein
   in the slip amount estimation step, the larger slip amount of ammonia is estimated as the estimated ammonia adsorption amount is increased, particularly in the case where the estimated ammonia adsorption amounts are compared at the same detected catalytic temperature.

5. The method according to any one of the preceding claims, wherein
   in the slip amount estimation step, the slip amount of ammonia is estimated such that the increase in the slip amount of ammonia with respect to an increase in the estimated ammonia adsorption amount is larger as the estimated ammonia adsorption amount is increased, particularly in the case where the estimated ammonia adsorption amounts are compared at the same detected catalytic temperature.

6. The method according to any one of the preceding claims,
   the engine (E) further including a NOx storage catalyst (45) that is disposed in a portion of the exhaust passage (41) on an upstream side of the NOx selective reduction catalyst (47), capable of storing NOx in exhaust gas, and capable of reducing stored NOx, and a NOx catalyst regeneration controller (60) that is configured to bring an air-fuel ratio of the exhaust gas to an air-fuel ratio equal to or near a stoichiometric air-fuel ratio or a richer air-fuel ratio than the stoichiometric air-fuel ratio in order to reduce NOx stored in the NOx storage catalyst (45),
   the method further comprising
   a reduction-time ammonia produced amount estimation step of estimating an amount of ammonia, that is discharged from the NOx storage catalyst (45) to the exhaust gas, when the NOx catalyst regeneration controller (60) reduces NOx stored in the NOx storage catalyst (45).

7. The method according to claim 6, wherein
   in the ammonia adsorption amount estimation step, the ammonia adsorption amount of the NOx selective reduction catalyst (47) is estimated on the basis of the amount of ammonia or an amount of a precursor of ammonia that is supplied by the reducing agent supplier (51) and/or on the basis of the amount of ammonia that is estimated in the reduction-time ammonia produced amount estimation step.

8. A method of determining abnormality of a catalyst (47) for an engine (E) using the method according to any one of the preceding claims,

the engine (E) further including a NOx sensor (118) that is disposed in the portion of the exhaust passage (41) on the downstream side of the NOx selective reduction catalyst (47) and whose output value varies in accordance with an amount of NOx and the amount of ammonia in the exhaust gas,

the method comprising an abnormality determination step of making an abnormality determination on whether the NOx selective reduction catalyst (47) is abnormal on the basis of the output value of the NOx sensor (118).

9. The method according to claim 8, wherein
the abnormality determination step includes an abnormality determination restriction step of restricting the abnormality determination when the slip amount of ammonia that is estimated in the slip amount estimation step is equal to or larger than a specified slip amount.

10. A computer program product comprising computer-readable instructions which, when loaded and executed on a suitable system, perform a method according to any one of the preceding claims.

11. An exhaust gas state determination device (60) for an engine (E), wherein the engine (E) includes a NOx selective reduction catalyst (47) that is provided in an exhaust passage (41) of the engine (E) and configured to reduce NOx by using a supplied reducing agent, and a reducing agent supplier (51) capable of supplying ammonia or a precursor of ammonia as the reducing agent to the NOx selective reduction catalyst (47), the catalyst abnormality determination device comprising:

an ammonia adsorption amount estimator (61) configured to estimate an ammonia adsorption amount of the NOx selective reduction catalyst (47);
a catalytic temperature detector (117) configured to detect a temperature of the NOx selective reduction catalyst (47) ; and
a slip amount estimator (62) configured to estimate a slip amount of ammonia, that is an amount of ammonia discharged into a portion of the exhaust passage (41), on a downstream side of the NOx selective reduction catalyst (47) on the basis of the estimated ammonia adsorption amount that is estimated by the ammonia adsorption amount estimator (61) and the detected catalytic temperature that is detected by the catalytic temperature detector (117),
wherein
the slip amount estimator (62) is configured to estimate the slip amount of ammonia such that an increase in the slip amount of ammonia with respect to an increase in the detected catalytic temperature is larger as the detected catalytic temperature is higher.

12. The method according to claim 1, wherein
the slip amount estimator (62) is configured to estimate the slip amount of ammonia such that an increase in the slip amount of ammonia with respect to an increase in the detected catalytic temperature is larger when the detected catalytic temperature is high than when the detected catalytic temperature is low in the case where the detected catalytic temperatures are compared by using the same estimated ammonia adsorption amount.

13. A catalyst abnormality determination device (60) for an engine (E), comprising:

an exhaust gas state determination device (60) according to claim 11 or 12;
a NOx sensor (118) that is to be disposed in the portion of the exhaust passage (41) on the downstream side of the NOx selective reduction catalyst (47) and whose output value varies in accordance with an amount of NOx and an amount of ammonia in the exhaust gas; and
an abnormality determiner (63) configured to make an abnormality determination on whether the NOx selective reduction catalyst (47) is abnormal on the basis of the output value of the NOx sensor (118).

14. The catalyst abnormality determination device (60) according to claim 13, further comprising
an abnormality determination restrictor (64) that restricts the abnormality determination by the abnormality determiner (63) when the slip amount of ammonia that is estimated by the slip amount estimator (62) is equal to or larger than a specified slip amount.

15. An engine (E), comprising
an exhaust gas state determination device (60) according to claim 11 or 12, or a catalyst abnormality determination device (60) according to claim 13 or 14;
a NOx selective reduction catalyst (47) that is provided in an exhaust passage (41) of the engine (E) and configured to reduces NOx by using a supplied reducing agent; and
a reducing agent supplier (51) capable of supplying ammonia or a precursor of ammonia as the reducing agent to the NOx selective reduction catalyst (47).

Fig.1

EP 3 546 714 A2

EP 3 546 714 A2

Fig.2

Fig.3

```
                        ┌─────────┐
                        │  START  │
                        └────┬────┘
                             │
                             ▼
              ┌──────────────────────────┐
              │  READ INFORMATION FROM   │────  S101
              │     VARIOUS SENSORS      │
              └──────────────┬───────────┘
                             │
                             ▼
                         S102
                       ╱─────────╲
                      ╱   SCR CATALYTIC ╲      NO
                     ╱  TEMPERATURE < FIRST╲──────────────┐
                     ╲  SPECIFIED TEMPERATURE? ╱           │
                      ╲                   ╱                 ▼
                       ╲─────────╱                      S104
                          │                           ╱─────────╲
                         YES                         ╱   SCR CATALYTIC ╲     NO
                          │                         ╱ TEMPERATURE < SECOND╲────────┐
                          │                         ╲ SPECIFIED TEMPERATURE? ╱      │
                          │                          ╲                   ╱          ▼
                          │                           ╲─────────╱                S106
                          │                              │                     ╱─────────╲
                          │                             YES        NO         ╱ FLOW RATE OF ╲
                          │                              │       ┌───────────╱ THE EXHAUST GAS <╲
                          │                              │       │           ╲ SPECIFIED FLOW RATE? ╱
                          │                              │       │            ╲                ╱
                          │                              │       │             ╲─────────╱
      S103                │         S105                 │       │                  │
       │                  │          │                   │       │                 YES
       ▼                  ▼          ▼                    ▼       │      S107        ▼
  ┌──────────────┐      ┌──────────────────────┐         │        │      ┌──────────────────┐
  │ PURIFY NOx BY NOx │  │   PURIFY NOx BY NOx   │        │        │      │ PURIFY NOx BY SCR │
  │    CATALYST       │  │ CATALYST and SCR CATALYST │    │        │      │    CATALYST       │
  └──────┬───────┘      └──────────┬───────────┘         │        │      └─────────┬────────┘
         │                         │                                              │
         │◄────────────────────────┘                                             │
         │◄─────────────────────────────────────────────────────────────────────┘
         ▼
    ┌─────────┐
    │ RETURN  │
    └─────────┘
```

Fig.4

Fig.5

(A)

SET POST INJECTION
AMOUNT — S212

SET POST INJECTION
TIMING — S213

S214
POST INJECTION
AMOUNT < SECOND
SPECIFIED INJECTION
AMOUNT?

NO

EXECUTE NORMAL FUEL
INJECTION CONTROL — S216

YES

S215
CONTROL FUEL INJECTION
VALVE TO PERFORM POST
INJECTION WITH SET POST
INJECTION AMOUNT

(B)

RETURN

Fig.6

Fig.7

Fig.8

ADSORPTION LIMIT

AMMONIA
ADSORPTION AMOUNT
OF SCR CATALYST

LARGE

MEDIUM

SMALL

0

LARGE

0

LOWEST TEMPERATURE

HIGH →

HIGHEST TEMPERATURE

TEMPERATURE OF SCR CATALYST

Fig.9

EP 3 546 714 A2

Fig.10

EP 3 546 714 A2

Fig.11

START

READ FROM VARIOUS
SENSORS — S401

CALCULATE PURIFICATION
RATE OF NOx — S402

S403

PURIFICATION
RATE < SPECIFIED
PURIFICATION RATE?   NO

YES

S404

ESTIMATED SLIP AMOUNT
< SPECIFIED SLIP AMOUNT?   NO

YES

S405                                          S409

COUNT FAILURE                    STOP ABNORMALITY
                                 DETERMINATION

S406

NO   COUNT ≥ SPECIFIED VALUE?

YES

DETERMINE THAT SCR
CATALYST IS ABNORMAL — S407

WARNING — S408

RETURN

Fig.12

34

Fig.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014109224 A